(19)

**Europäisches Patentamt**
**European Patent Office**
**Office européen des brevets**

(11) **EP 4 575 567 A1**

(12) **EUROPEAN PATENT APPLICATION**
published in accordance with Art. 153(4) EPC

(43) Date of publication:
**25.06.2025 Bulletin 2025/26**

(21) Application number: **23855203.8**

(22) Date of filing: **18.08.2023**

(51) International Patent Classification (IPC):
**G01S 7/4861** (2020.01)   **G01S 17/89** (2020.01)
**G01S 17/931** (2020.01)   **G01S 7/481** (2006.01)
**G05D 1/20** (2024.01)

(52) Cooperative Patent Classification (CPC):
**G01S 7/481; G01S 7/4861; G01S 17/89;**
**G01S 17/931**

(86) International application number:
**PCT/KR2023/012306**

(87) International publication number:
**WO 2024/039237 (22.02.2024 Gazette 2024/08)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **18.08.2022   US 202263398923 P**
**30.08.2022   US 202263402117 P**
**30.08.2022   US 202263402126 P**
**30.08.2022   US 202263402333 P**
**30.08.2022   US 202263402385 P**
**23.05.2023   US 202318322264**
**23.05.2023   US 202318322285**

(71) Applicant: **LG INNOTEK CO. LTD**
**Gangseo-gu**
**Seoul 07796 (KR)**

(72) Inventors:
• **SMITH, Joshua S.**
**Pittsburgh, Pennsylvania 15222 (US)**
• **WEI, Esther**
**Pittsburgh, Pennsylvania 15222 (US)**
• **WILTON, Samuel Richard**
**Pittsburgh, Pennsylvania 15222 (US)**
• **LTZLER, Mark**
**Pittsburgh, Pennsylvania 15222 (US)**
• **KUDRYASHOV, Igor**
**Pittsburgh, Pennsylvania 15222 (US)**
• **JIN, Yu**
**Pittsburgh, Pennsylvania 15222 (US)**
• **NEGOITA, Viorel C.**
**Pittsburgh, Pennsylvania 15222 (US)**

(74) Representative: **Plasseraud IP**
**104 Rue de Richelieu**
**CS92104**
**75080 Paris Cedex 02 (FR)**

(54) **SENSOR DEVICE, LIDAR DEVICE, AND METHOD FOR CONTROLLING SAME**

(57)    A LiDAR device disclosed in an embodiment may comprise: a data collection unit that collects raw data; a preprocessing unit that removes noise from the collected data; a histogram circuit that converts an output of the preprocessing unit into a histogram; a buffer that buffers the output of the preprocessing unit; a sub-histogram extraction unit that receives the converted histogram data and the buffered data and detects at least one peak from the histogram; and a waveform analyzer that generates a target waveform on the basis of a correlation between the at least one peak data and the buffered data.

[FIG. 2]

EP 4 575 567 A1

**Description**

[TECHNICAL FIELD]

The present invention relates to a sensor device and a method for controlling the same. More particularly, the present invention relates to a LiDAR device and a method for controlling the same. Also, the present invention relates to a rotating sensor device and a LiDAR device.

[BACKGROUND ART]

An autonomous vehicle (AV) uses a plurality of sensors for situational awareness. The sensors that are a portion of a self-driving system (SDS) of the autonomous vehicle may include one or more among cameras, light detection and ranging (LiDAR) devices, and inertial measurement units (IMUs). The sensors such as cameras and LiDAR are used to capture and analyze surrounding scenes of the vehicle. These captured scenes are then used to detect objects, including static objects such as fixed structures and dynamic objects such as pedestrians and other vehicles. Furthermore, data collected from the sensors may be used to detect conditions such as road markings, lane curvature, traffic signals, and signs. Furthermore, scene representations, such as three-dimensional point clouds obtained from the vehicle's LiDAR, may be combined with one or more images acquired from cameras to provide additional insight into the scene or circumstance around the vehicle.

Furthermore, a LiDAR transceiver may include a transmitter that transmits light in the ultraviolet (UV), visible, and infrared spectrum regions, and/or one or more photodetectors that convert other electromagnetic radiation into electrical signals. The photodetectors, for example, may be used in optical fiber communication systems, process control, environmental sensing, safety and security, optical sensing, and various applications including other imaging applications such as ranging applications. Since the photodetector has high sensitivity, the photodetector may detect faint signals returned from distant objects. However, sensitivity to optical signals requires precise alignment between components and alignment of laser emissions.

[DISCLOSURE OF INVENTION]

[TECHNICAL PROBLEM]

The present invention provides a sensor device and a LiDAR device, including a transceiver device with a transmitter assembly that transmits optical signals and a receiver assembly that receives and processes the optical signals.

The present invention also provides a sensor device and a LiDAR device that use a fixed pixel size or angular resolution along with an integrated amount of raw data per point, and for improving detection capability and data quality (accurate and precise range and intensity).

The present invention also provides a sensor device and a LiDAR device with a Geiger mode avalanche photodiode (GmAPD) LiDAR system.

The present invention also provides a method for controlling a sensor device and a LiDAR device, in which a digital signal processing (DSP) circuit/module/processor integrates data spatially and temporally to generate and process LiDAR data.

The present invention also provides a method for controlling a sensor device and a LiDAR device that transforms a multi-stage histogram to reconstruct a portion of a high-resolution histogram in time domain of interest.

The present invention also provides a sensor device and a LiDAR device for improving driving performance without deterioration of data quality.

The present invention also provides a method for controlling a rotating imaging device, such as a sensor device and a LiDAR device, to obtain optical impressions by synchronizing a rotational movement of the imaging device with a system clock, such as a precision time protocol (PTP).

The present invention also provides a method for controlling a rotating imaging device, such as a sensor device and a LiDAR device, to obtain optical impressions using a rotating imaging device, in which a field of view of a sensor of the rotating imaging device is constant or controlled for azimuth which is kept constant during image acquisition.

The present invention also provides an imaging device and a method for controlling the same for obtaining optical impressions through rotational scanning, where a rotational scan speed and/or angular position of the rotating imaging device minimize positional drift within the device's field of view.

The present invention also provides a device and a method for processing image data acquired through a rotating imaging device, wherein the image data is divided and grouped into two or more segments in accordance with angular position or scanning methods.

The present invention also provides a device and a method for controlling a rotating imaging device, capturing image data from a sensor in the rotating imaging device, and controlling a rotating movement of the rotating imaging device to synchronize the sensor in the rotating imaging device with capture of the image data through a common system clock.

[TECHNICAL SOLUTION]

An embodiment of the present invention provides a LiDAR device including: a data collection unit that collects raw data generated based on an optical signal reflected from an object; a pre-processing unit that removes noise from the collected data; a histogram circuit that converts an output of the pre-processing unit into histogram data; a buffer that buffers the output of the pre-processing unit; a sub-histogram extraction unit that receives the converted histogram data and the buffered data and detect at least one peak from the histogram data to generate peak data; and a waveform analyzer that generates a target waveform based on a correlation between the at least one peak data and the buffered data.

In an embodiment, data stored in the buffer may be recorded by the sub-histogram extraction unit, and then deleted.

In an embodiment, the LiDAR device may further include: a filter that extracts a peak through the converted histogram data.

In an embodiment, the LiDAR device may further include: a window circuit that identifies a window for performing filtering on the converted histogram data within the filter.

In an embodiment, the histogram circuit and the sub-histogram extraction unit record, read and delete the histogram data through an internal memory and a dual port.

In an embodiment, a buffering by the buffer and a pre-processing by the pre-processing unit oversample a plurality of adjacent super-pixels.

In an embodiment, the LiDAR device may further include: a Geiger mode APD that generates the raw data, and be a rotating imaging device.

In an embodiment, the LiDAR device may further include: a plurality of light source arrays which are vertically arranged; and a transmission module having a transmitting optical system disposed on an emission side of the light source arrays.

In an embodiment, the rotating imaging device rotates in synchronization with a master clock of a system in a vehicle.

In an embodiment of the present invention, a LiDAR device includes: a light source array that generates a light pulse and have a plurality of light sources which are arranged in at least two rows; a transmitting optical system that is disposed on an emission side of the light source array and refracts light toward an object; a sensor array that senses a light pulse reflected from a scan region of the object and has a plurality of photodetectors; a receiving optical system disposed on an incidence side of the sensor array; and a main processor that acquires 2a x 2b (a=2~3, b<a) pixel of the scan region along a rotational direction and captures a three-dimensional point cloud through oversampling which overlaps at least one adjacent row of the acquired super-pixels.

In an embodiment, the LiDAR device has a field of view of 30 degrees or less.

In an embodiment, the super-pixels may include 12 pixels arranged in two rows, and the LiDAR device may rotate at an angle of 2mrad per frame.

In an embodiment of the present invention, a method for controlling a LiDAR device includes: receiving and pre-processing raw LiDAR data; converting the pre-processed output into a histogram; buffering the pre-processed output; detecting a peak from the output converted into the histogram; and generating a target waveform based on a correlation between the detected peak and a time data point corresponding to the buffered output.

In an embodiment, the method may further include: reading and then deleting the buffered data.

In an embodiment, the pre-processing may include oversampling at least one row of a plurality of super-pixels acquired in a rotational direction.

In an embodiment, the LiDAR device may determine a position through a plurality of line scans with time differences in a rotational direction and a scan interpolated by a non-linear function in a vertical direction.

The additional scope of applicability of the present invention would become apparent from the following detailed description. However, the detailed description and specific examples represent preferred embodiments of the present invention and are provided solely for illustration. This is because that various changes and modifications within the spirit and scope of the present invention would be apparent to those skilled in the art from the detailed description. The present invention would be more fully understood from the detailed description and accompanying drawings provided below, which are provided solely for exemplary purposes and not construed as limiting the present invention.

[EFFECT OF THE INVENTION]

The sensor device and the LiDAR device according to the embodiment of the present invention may improve performance without degradation of quality of data and provide the optimized autonomous driving device. Furthermore, by reducing the performance or size of the processor (e.g., FPGA), the costs and power consumption may be reduced, and the optimized digital signal processor (DSP) may be provided.

According to the embodiment of the present invention, the optical impressions may be more effectively acquired through the rotation imaging devices, such as sensor devices and LiDAR devices. The rotational scan speed and the angular position may be adjusted to minimize the field of view of the rotation imaging device.

[BRIEF DESCRIPTION OF THE DRAWING]

FIG. 1 is a perspective view of a vehicle including a LiDAR device according to an embodiment of the present invention.

FIG. 2 is a block diagram illustrating an example of a vehicle system including the LiDAR device of FIG. 1.

FIG. 3 is a conceptual view for explaining an operation of the LiDAR device of FIG. 2.

FIG.4 is a perspective view illustrating an example of arrangement of a transmission module and a sensing module of the LiDAR device of FIG. 2.

FIG. 5 is a view illustrating an example of a line scan in a scan region of the LiDAR device shown in FIGS.3 and 4.

FIG. 6 is a view illustrating an operation of the transmission module that transmits pulses for the line scan in the LiDAR device shown in FIGS. 3 and 4.

FIG. 7 is a view illustrating the operation of the transmission module and the sensing module that transmit and receive the line scan in the LiDAR device shown in FIGS. 3 and 4.

FIG. 8 is a view illustrating a scan region and a laser spot by a LiDAR device according to a comparative example.

FIG. 9 is a view illustrating an example of a target region scanned by light emitted from a light source array as an example of the transmission module of the LiDAR device according to the present invention.

FIG. 10 is an example of the transmission module of the LiDAR device according to the present invention, illustrating an example of a target region scanned by light emitted from a light source array with defective light sources.

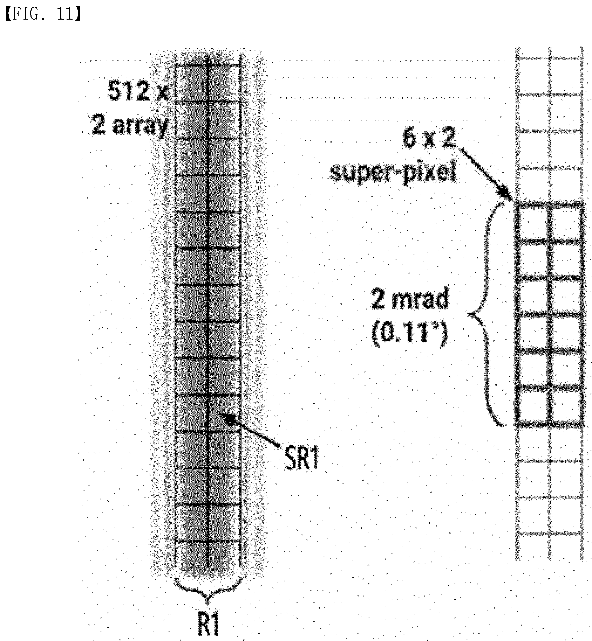

FIG. 11 is a view illustrating an example of a pixel array and a super-pixel for capturing a point cloud in the LiDAR device according to the present invention.

FIG. 12 is a view for illustrating a method for oversampling the super-pixel for capturing the point cloud in the LiDAR device according to the present invention.

FIG. 13 is a view illustrating an example of a histogram of oversampling data in FIG. 12.

FIG. 14 is a conceptual view illustrating division and extraction of a rotational scan region based on priority in the LiDAR device according to an embodiment of the present invention.

FIG. 15 is a block diagram illustrating an example of data packet processing based on priority by a processor of the LiDAR device according to the present invention.

FIG. 16 is a block diagram illustrating an example of division by a flow control module based on a priority region in the LiDAR device according to the present invention.

FIG. 17 is a flowchart illustrating a data processing method based on a priority region in the LiDAR device according to the present invention.

FIG. 18 is a perspective view illustrating a multi-axis movable transmission module in another example of the LiDAR device according to the present invention.

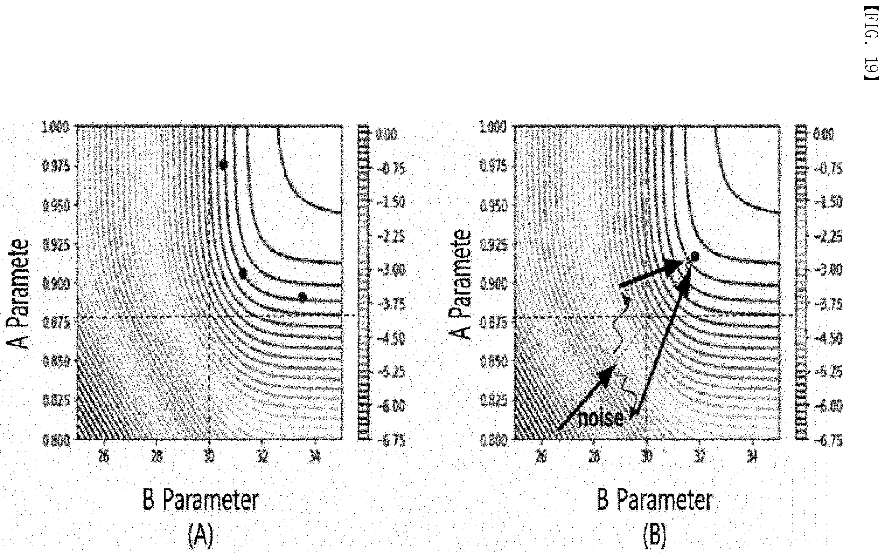

(A) and (B) of FIG. 19 are views illustrating examples of images of scan profile based on a linear merit function with respect to horizontal and vertical axes (A, B) in a comparative example of the LiDAR device.

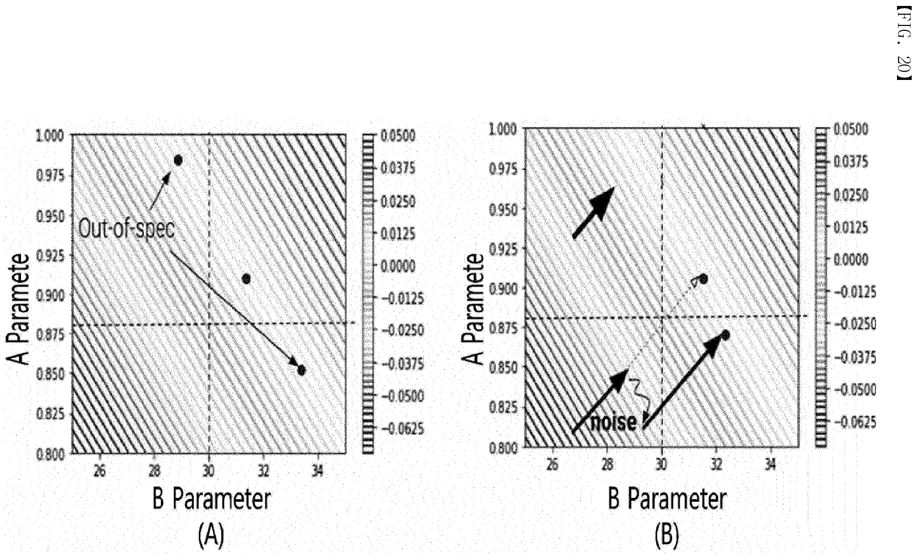

(A) and (B) of FIG. 20 are views illustrating examples of images scan profile based on a nonlinear merit function with respect to the horizontal and vertical axes (A, B), in the LiDAR device according to the present invention.

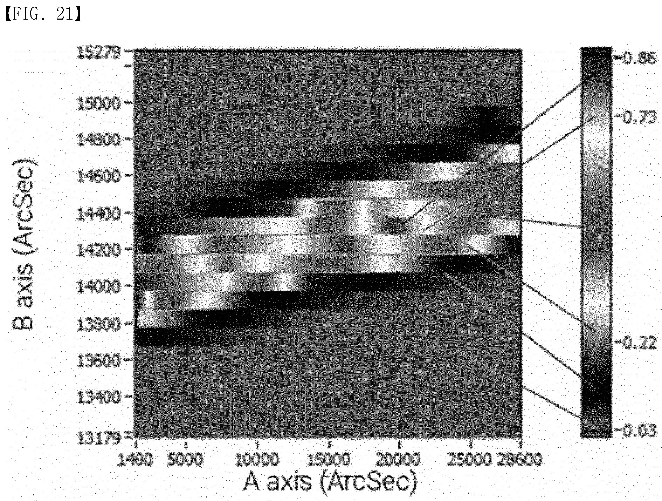

FIG. 21 is a view illustrating an image of a region scan profile on the horizontal and vertical axes A and B, in the LiDAR device according to the present invention.

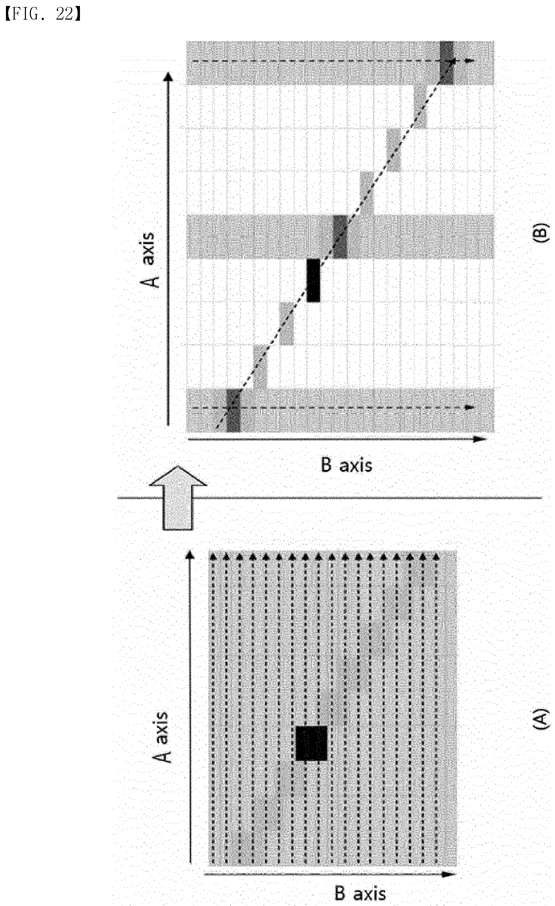

FIG. 22 is a conceptual view for illustrating the decoupling of horizontal and vertical axes by linear interpolation, in another example of the LiDAR device according to the present invention.

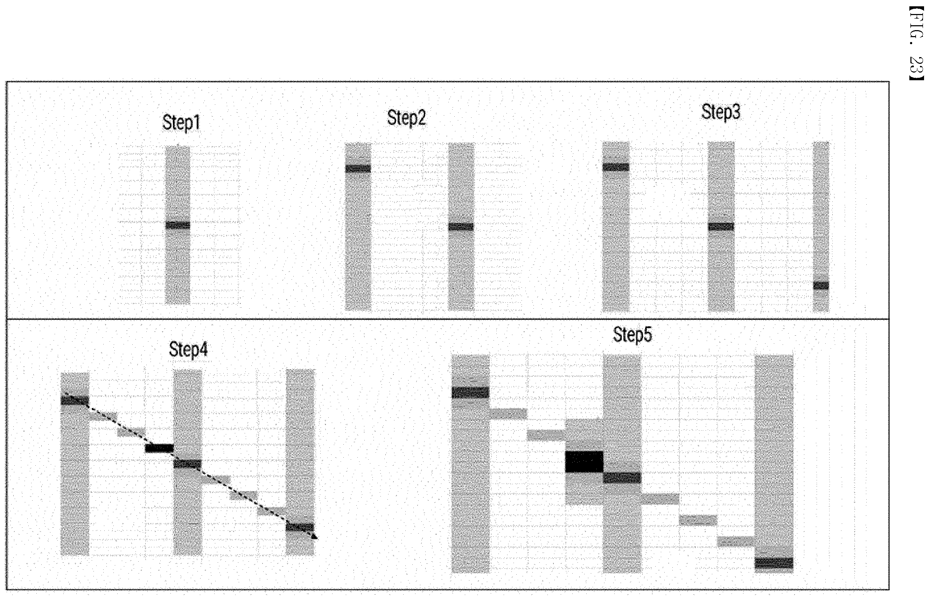

FIG. 23 is a flowchart for adjusting a multi-stage scan range, in another example of the LiDAR device according to the present invention.

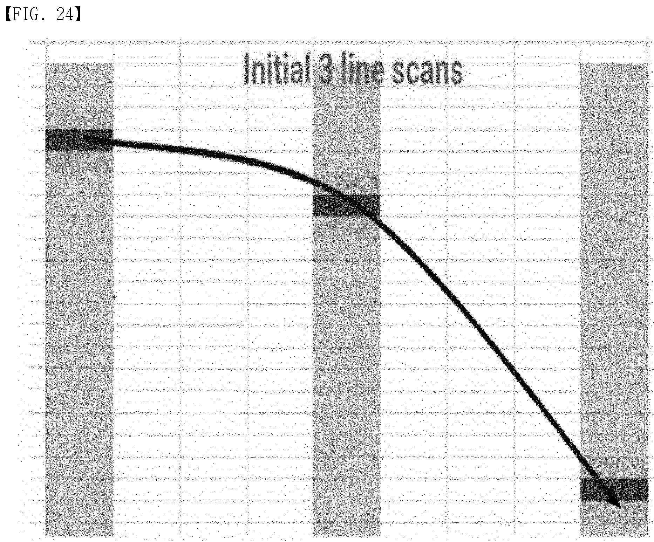

FIG. 24 is a view for explaining a 3-D scan process for the peak position in the scan region, in another example of the LiDAR device according to the present invention.

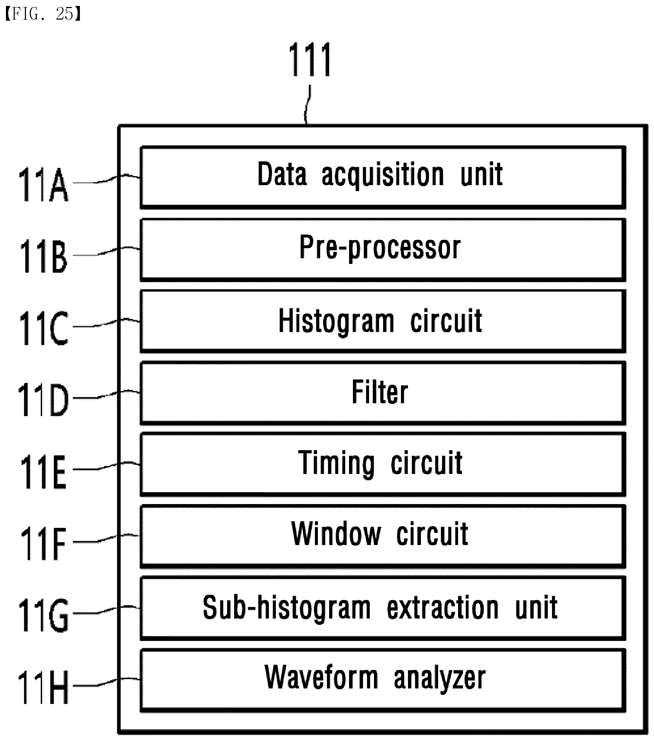

FIG. 25 is a detailed block diagram of the main processor of the LiDAR device according to an embodiment of the present invention.

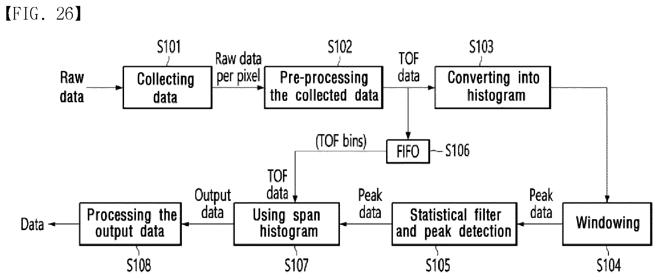

FIG. 26 is a flowchart illustrating the processing of LiDAR data by the main processor shown in FIG. 25.

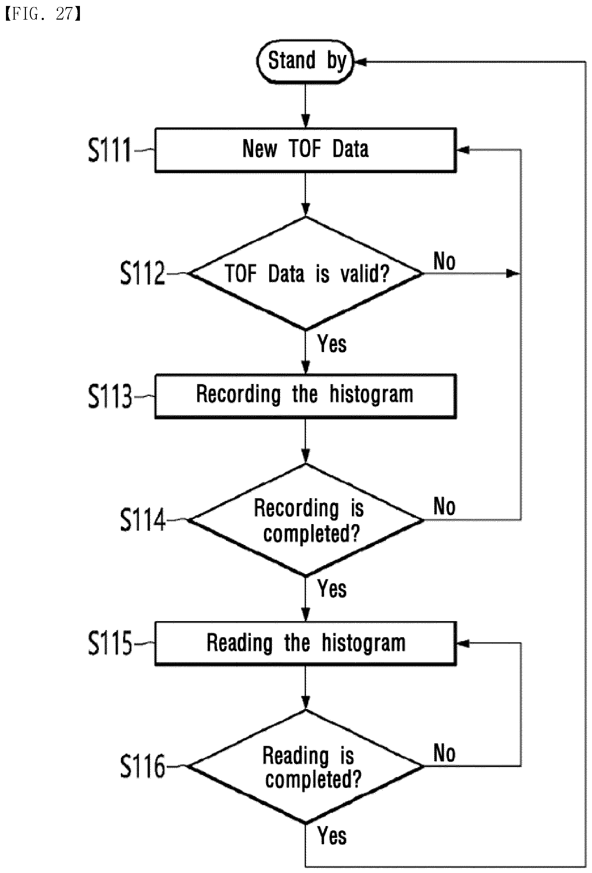

FIG. 27 is a flowchart illustrating a data processing procedure by the main processor shown in FIG. 25.

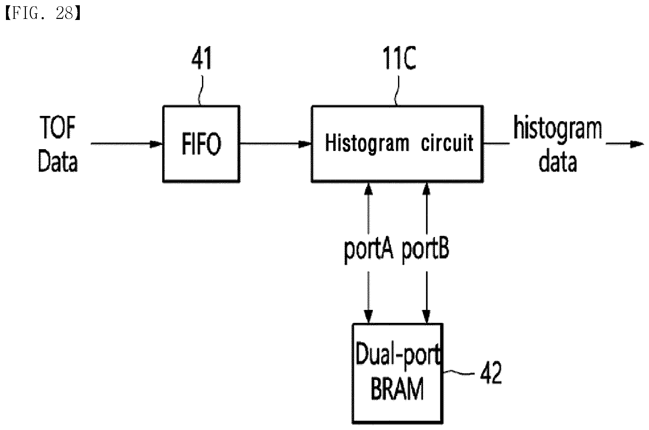

FIG. 28 is a flowchart illustrating the operation of the histogram circuit according to an embodiment of the present invention.

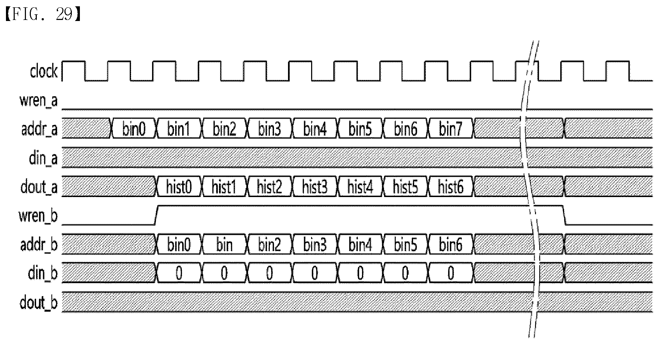

FIG. 29 is a timing diagram illustrating an example of a timing diagram for reading and clearing of histogram in memory according to an embodiment of the present invention.

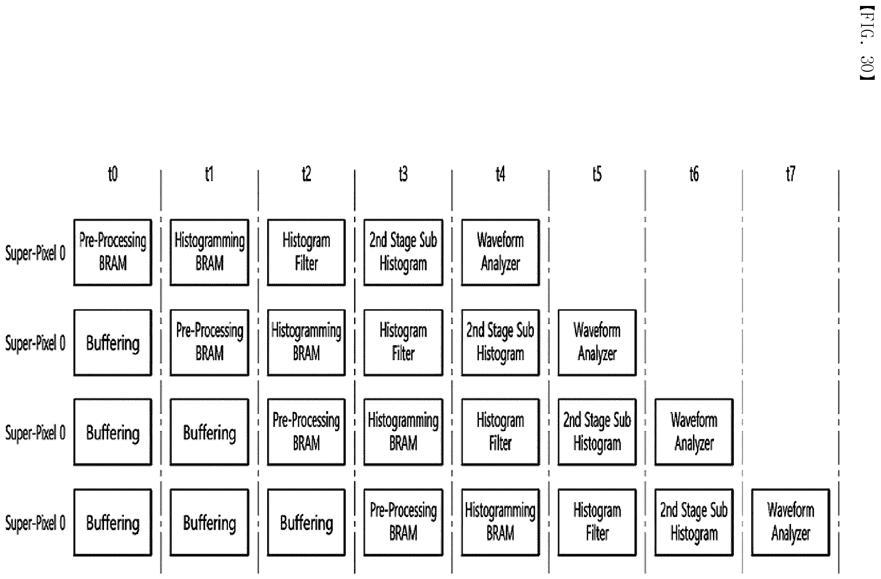

FIG. 30 is a view illustrating a DSP pipeline resource sharing the same resources according to an embodiment of the present invention.

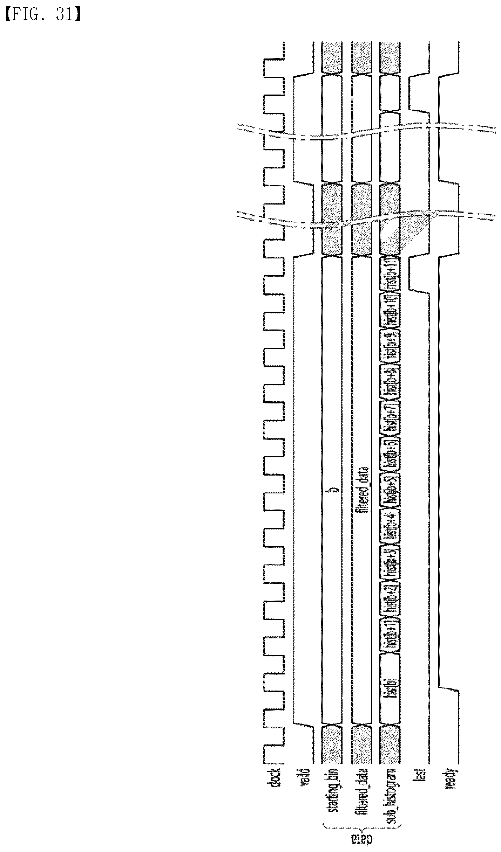

FIG. 31 is a timing diagram illustrating the output of a sub-histogrammer for a streaming interface according to an embodiment of the present invention.

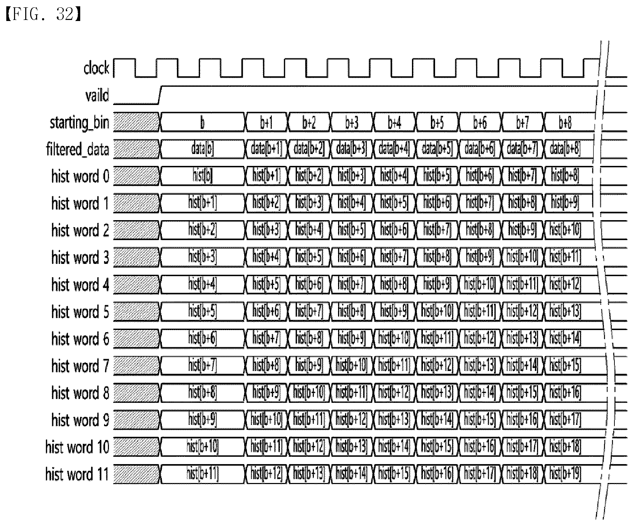

FIG. 32 is a timing diagram illustrating an example of the output of a histogram filter according to an embodiment of the present invention.

[DETAILED DESCRIPTION OF THE INVENTION]

Hereinafter, embodiments will be described in detail with reference to the accompanying drawings in which like reference numerals refer to like components. However, the present invention may be embodied in various forms, and should not be limited to the embodiments just exemplified herein. Rather, these embodiments are provided as examples to ensure that this disclosure is thorough and complete, and would fully convey the features and functions of the present invention to those skilled in the art. Accordingly, processes, elements, and techniques that are not necessary for fully understanding the features and functions of the present invention may not be described. Unless otherwise specified, like reference numerals in the accompanying drawings and written descriptions represent like components, thereby descriptions thereof will not be repeated.

A LiDAR system may be referred to as a depth detection system, laser ranging system, laser radar system, LIDAR system, or laser/light detection and ranging (LADAR or ladar) system. LiDAR is a type of ranging sensors characterized in that its detection range is long, resolution is high, and environmental interference is low. LiDAR is widely applied in fields such as intelligent robotics, unmanned aerial vehicles, and autonomous or self-driving technologies. The operating principle of LiDAR is to estimate the distance based on the round-trip time of electromagnetic waves (e.g., time of flight or delay time) between the source and the target.

Generally, LiDAR systems, such as direct time-of-flight (D-TOF) LiDAR systems, measure the distance to an object (e.g., depth) by emitting light pulses (e.g., laser pulses) toward the object, and measuring the time it takes for the light pulses to be reflected from the object and be detected by a sensor of the LiDAR system. For instance, to reduce noise from ambient light, repeated measurements may be performed to generate individual histograms of relative time-of-flight (TOF) values based on the repeated measurements, and peaks of the individual histograms may be calculated to detect events (e.g., to determine the depth of a point or region of an object that reflects the light pulses).

Above-mentioned aspects and features of the embodiments of the present invention will be described in more detail with reference to the accompanying drawings.

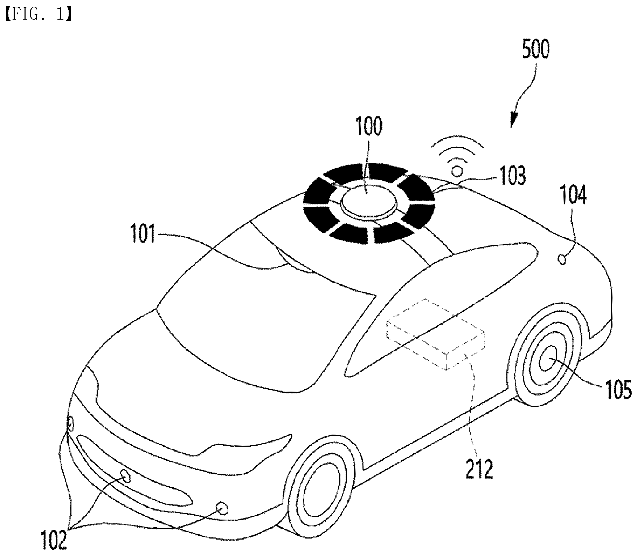

FIG. 1 is a perspective view of a vehicle including a LiDAR device according to an embodiment of the present invention.

Referring to FIG. 1, a moving object such as a vehicle 500 may include a LiDAR device 100, a camera unit 101, vehicle recognition sensors 102 and 104, a global positioning system (GPS) sensor 103, a vehicle control module 212, and an ultrasonic sensor 105.

The LiDAR device 100 that is a rotation imaging device or a sensor device may be combined on a portion of the vehicle 500, rotate in 360-degree, perform sensing of a distance between the vehicle and objects (static objects or dynamic objects), surrounding environments and shapes, and control driving using measured data. The objects or environment around the vehicle may be collected and analyzed, and detection data that provides information about objects positioned within an appropriate proximity range may be generated though a three-dimensional point cloud that uses this sensing technology.

The LiDAR device 100 may communicate with a vehicle control module 212, and may transmit and receive information related to the vehicle's driving. The vehicle control module 212 may communicate with various systems or sensors within the vehicle, and may perform various controls. The vehicle control module 212 is a device that controls and monitors the vehicle's various systems, and may include control devices such as an electronic control unit (ECU). The vehicle control module 212 may communicate with an external mobile device, and may be electrically connected to a detachable storage device.

The camera unit 101 may be mounted in one or a plurality of locations inside and/or outside the vehicle, and may capture images of the front and/or images of the rear of the moving vehicle and may provide or store the images via a display device (not shown). The captured image data may optionally include audio data. In another example, the camera unit 101 may be mounted at the front, rear, each corner, or each side of the vehicle 500 to capture the surrounding images of the vehicle and provide the images through a display device (not shown). The vehicle control module 212 or another processor may identify traffic signals, vehicles, and pedestrians based on the data captured by the camera unit 101 to provide the driver with acquired information. The above-described camera unit 101 may be used as a driving assistance device.

The front radar 102 is installed in a plurality of units at the front of the vehicle 500, and detects a distance between the vehicle 500 and frontal objects. The rear radar 104 is installed in a plurality of units at the rear of the vehicle 500, and detects a distance between the vehicle 500 and rearward objects. When there is the object information which is detected through these radars 102 and 104, nearby objects or obstacles are detected and the driver is notified thereof via alarms or warning messages.

The GPS sensor 103 may receive signals from satellites, and provide the received signals to devices such as the vehicle control module 212, the LiDAR device 100, and the camera unit 101, and the devices may provide or calculate information such as position, speed, and time of the vehicle based on GPS location signals.

The ultrasonic sensor 105 may perform sensing of the distance to nearby vehicles or obstacles, to provide convenience for safely parking the vehicle in a parking space. Furthermore, the ultrasonic sensor 105 may prevent accidents that may occur while driving. This ultrasonic sensor 105 may be installed at the rear, sides, or wheels of the vehicle.

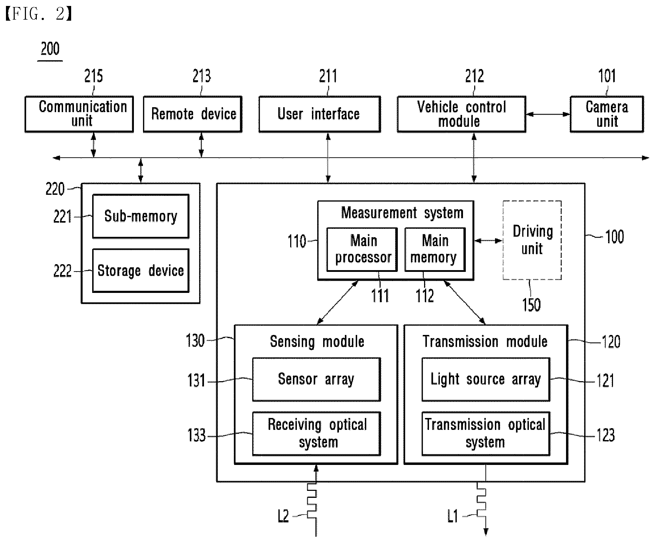

As shown in FIG. 2, the vehicle system 200 including the LiDAR device 100 and the vehicle control module 212 receives input of a user or driver or provides information to the user or driver through a user interface 211. The user interface 211 may include a display device, touch panel, buttons, voice recognition, wired or wireless input devices and be connected via wired or wireless communication to enable communication between the driver and various devices.

The vehicle system 200 communicates with the remote device 213, which may remotely communicate with the user or external systems or receive external control signals. The communication unit 215 may support wired or wireless communication, and may, for example, be a wired or wireless module.

The storage unit 220 may include one or more sub-memories 221 therein. Furthermore, the storage unit 220 may include a portable or detachable storage device 222. The LiDAR device 100 may communicate with the user interface 211 and the camera unit 101.

The LiDAR device 100 may include a driving unit 150 such as a motor, and the driving unit 150 may rotate a portion or a whole of the LiDAR device 100 in 360 degrees based on the control signals. The driving unit 150 communicates with internal components of the LiDAR device 100, such as the measurement system 110, and enables a rotational movement of the LiDAR device 100 around an axis thereof.

The LiDAR device 100 may include the measurement system 110, the transmission module 120, and the sensing module 130. The driving unit 150 may convey driving force to enable the rotation of the measurement system 110, transmission module 120, and sensing module 130.

**The** measurement system 110 may include a main processor 111 and a main memory 112, and the main processor 111 may be implemented as a general-purpose processor, an ASIC (Application Specific Integrated Circuit), one or more FPGAs (Field Programmable Gate Arrays), a group of processing components, or other suitable electronic processing components. The main memory 112 (e.g., memory, memory unit, and storage device) may include one or more devices (e.g., RAM, ROM, flash memory, hard disk storage, etc.) for storing data and/or computer code to complete or facilitate various processes described in the present invention. The main memory 112 may be or include a volatile memory or non-volatile memory. The main memory 112 may include database components, object code components, script components, or any other type of information structure to support the various activities and information structures described in the present invention. According to the embodiments, the main memory 112 may be communicatively connected to the main processor 111.

The measurement system 110 may include one or more processors (also referred to as central processing units or CPUs). The one or more processors may be connected to a communication infrastructure or bus. Furthermore, each of the one or more processors may be a graphics processing unit (GPU). In some examples, the GPU may include a specialized electronic circuit designed to handle mathematically intensive applications. The GPU may have an efficient parallel structure for parallel processing of large block data such as mathematically intensive data which is commonly used in computer graphics applications, images, and videos.

The measurement system 110, as a computer system, may be connected to one or more user input/output devices such as a monitor, keyboard, or pointing device, which communicate with the communication infrastructure through a user input/output interface.

The transmission module 120 may include a light source array 121 and a transmission optical system 123. The transmission module 120 may include a processor or control module such as a general-purpose processor, ASIC, or FPGA, capable of controlling the operation of the light source array 121 and the transmission of optical signals, and also may include an internal memory storing code for controlling the generation of laser beams.

The light source array 121 may include a one-dimensional or two-dimensional array, and may be individually addressable or controlled. The light source array 121 may include a plurality of light sources that generate laser beams or light pulses. The light sources may include light sources such as a laser diode (LD), edge-emitting lasers, vertical-cavity surface-emitting lasers (VCSELs), distributed feedback lasers, light-emitting diodes (LEDs), super-luminescent diodes (SLDs), etc. However, it is not limited thereto.

The light source array 121 may include a plurality of electrically connected type of surface-emitting laser diodes such as a VCSEL array, and each transmitter may be individually addressable or controlled. The light source array 121 may be implemented as a one-dimensional (Q*P) VCSEL array or a two-dimensional array, having Q rows and P columns. Here, Q and P (rows and columns) are integers of 2 or more (Q > P). Furthermore, each VCSEL arrays may be grouped in plurality to form individual light sources.

The light signal emitted from the light source array 121 may be projected toward an object through the transmission optical system 123. The transmission optical system 123 may include one or more lenses, or one or more lenses along with a micro-lens array positioned in front of them. The transmission optical system 123 may include one or a plurality of optical lens elements to shape the laser beams in a desired manner. In other words, the transmission module 120 may set the irradiation direction or angle of the light generated by the light source array 121 under the control of the main processor 111. Furthermore, the LiDAR device 100 may include a beam splitter (not shown) to overlap or separate the transmitting laser beam L1 and the receiving laser beam L2 in the device.

The transmission module 120 may irradiate either pulsed light or continuous light, and may transmit multiple times toward the target object to be scanned. The processor 111 generates a start signal at the time of light transmission, which may be provided to a time-to-digital converter (TDC). The start signal may be used for calculating the time of flight (TOF) of the light.

The sensing module 130 may include a sensor array 131 and a receiving optical system 133. The sensing module 130 may perform conversion of raw histogram, include a matching filter, a peak detection circuit, SPAD saturation and quenching circuits, and further include a processor that performs at least one of compensating for pulse-shaped distortion. This processor may be implemented as a general-purpose processor, an ASIC (Application Specific Integrated Circuit), one or more FPGAs (Field Programmable Gate Arrays), a group of processing components, or other suitable electronic processing elements. The sensing module 130 may include a memory (not shown) with one or more devices (e.g., RAM, ROM, flash memory, hard disk storage, etc.) for storing detected optical signals internally.

The sensor array 131 may receive the laser beam L2 reflected or scattered from the object through the receiving optical system 133. The sensor array 131 may include a detector segmented into a plurality of pixels, and a photodetection element may be disposed on each of a plurality of the pixels. The receiving optical system 133 may be optical elements for focusing the reflected light onto a predetermined pixel.

The sensing module 130 may convert the reflected light into a stop signal, when the reflected light is received by the sensor array 131. The stop signal, together with the start signal, may be used for calculating the TOF of the light. The sensor array 131 or the sensing module 130 may include a time-to-digital converter (TDC) to measure the TOF of the light detected by each of a plurality of the photodetectors. The photodetectors may be light-receiving elements that generate electrical signals based on the detected light energy, and may be, for instance, Single Photon Avalanche Diodes (SPADs), which have high sensing sensitivity.

The sensor array 131 may be implemented as a one-dimensional or two-dimensional array, and may be a group of photodetectors, such as SPADs (Single Photon Avalanche Diodes) or single-photon detectors (APD, Avalanche Photo Diode). One embodiment of the present invention may be implemented using single-photon photodetectors. The sensor array 131 measures light pulses, i.e. the light corresponding to image pixels through the receiving optical system 133. Furthermore, the sensor array that is a SPAD array may be arranged as a two-dimensional SPAD array with M rows and N columns. Here, M and N are integers of 2 or more. Furthermore, each of SPAD sub-arrays may be grouped in plurality to form a light sensor. The sensor array may operate in Geiger mode, i.e. Guide mode APD (GmAPD).

The main processor 111 processes signals to acquire information about the object using the light detected by the sensing module 120. Based on the TOF of the light reflected from the object, the main processor 111 determines the distance to the object, and performs data processing for analyzing positions and shapes of the objects. The information analyzed by the processor 111, such as the shapes and positions of the objects, may be conveyed to other devices.

The transmission optical system 123 refracts the light pulses generated by the light source array 121 to projects them toward the object, and the light pulses are incident on and reflected from the surface of the object, and the reflected light pulses are sensed by the sensor array 131 through the receiving optical system 133. Based on the elapsed time (TOF: Time of Flight) from the emission of the light pulses to the detection of the reflected light pulses, the distance or depth to the object may be determined.

When the photodetection elements include SPADs, the sensing sensitivity is high, but noise also increases. The main processor 111, for calculating a reliable TOF of light using SPADs, emits light multiple times toward the object, and generates a histogram of the reflected light from the object, and then statistically analyzes the histogram. The main processor 111 may calculate the distances to points on the object's surface from the TOF of the light, and may generate a point cloud based on this distance data. The generated point cloud data may be stored in a database within the main memory 111. The point cloud data stored in the data base may be converted into and stored as a three-dimensional shape. The point cloud data may be processed by the preprocessing unit 11B (refer to FIG. 25) to pre-process data suitable for purposes and to remove noise. The noise, such as distortion caused by reflections from special environments like glass, may be automatically detected and eliminated.

The LiDAR device 100 may combine one or more image data obtained from the camera unit 101 with image representations such as the acquired point cloud to gain additional insight into the scene or situation surrounding the vehicle.

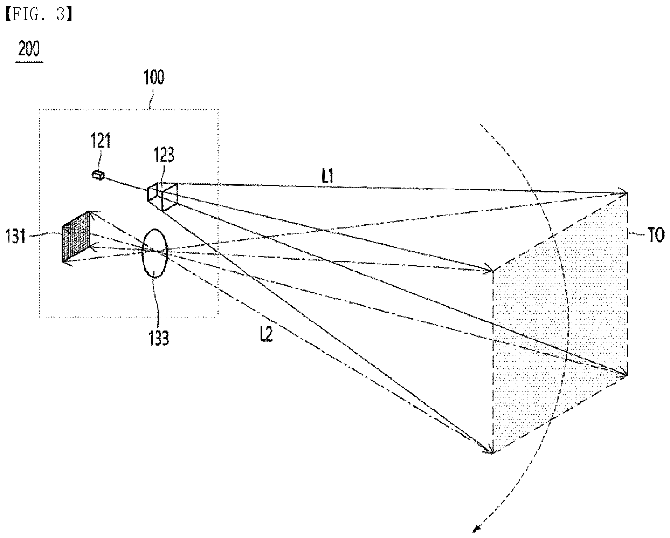

As shown in FIG. 3, the LiDAR device 100 may determine the position of an object using the angle of the emitted laser beam. For example, when an angle of a laser beam emitted toward a scan region T0 from the LiDAR device 100 is known, the LiDAR device 100 may detect the laser beam reflected from the object in the scan region T0 using the sensor array 131, and may determine the position of the object based on the emission angle of the laser beam. Furthermore, the LiDAR device 100 may determine the position of the object using the angle of the received laser beam. For instance, when a first object and a second object are at the same distance from the LiDAR device 100, but are located at different positions from the LiDAR device 100, the laser beam reflected from the first object and the laser beam reflected from the second object may be detected at different points on the sensor array 131. In other words, the LiDAR device 100 may determine the position of the objects based on the points at which the reflected laser beams are detected on the sensor array 131.

The LiDAR device 100 may have a scan region T0 that includes an object to detect the position of any surrounding objects. The scan region T0 represents the detectable region as a single frame, which may be described as a group of points, lines, or planes forming one screen during 1 frame. Furthermore, the scan region may indicate the irradiation region of laser beams emitted from the LiDAR device 100, and the irradiation region may indicate a group of points, lines, or planes where the laser beams emitted during one frame intersect with a spherical surface at the same distance. Furthermore, the field of view (FOV) may indicate a detectable region (field), and may be defined as an angular range of each scan region of the rotating LiDAR device 100, when viewing the LiDAR device as the origin.

To expand the scan region T0, the light source array 131 may be operated in a line or plane configuration. For instance, when a plurality of light sources are arrayed in a line or plane configuration, the direction and size of the laser beams emitted by these light sources may be altered through driving control, allowing the scan region T0 of the LiDAR device 100 to be expanded in a line or plane configuration.

In another example, the transmission module 120 or the transmission optical system 123 may include a scanning unit (not shown). The scanning unit may change a direction and/or size of the laser beams in the light source array 121, allowing the LiDAR device 100 to expand the scan region thereof or change the scanning direction. The scanning unit may expand or change the scan region of point-shaped laser beams into a line or plane configuration. Although one or more scanning units may be provided, the embodiment of the present invention is not limited thereto.

The LiDAR device 100 may provide a single-photon photodetector (SAPD) or a Geiger-mode LiDAR including a light source array 121 and a sensor array 131. The Geiger mode may be highly sensitive to single photons, and may transmit a space-filling (gap-less) image. In other words, the space-filling image refers to one in which the detector has a recovery time - the time required for the detector to return to a photon-detecting state to detect the next photon after detecting one photon -, and this recovery time is represented as a time difference or gap between the photons detected.

A photodetector is defined as an APD where reverse voltage is applied to induce avalanche multiplication, providing internal gain within the components, and the APD offers a high signal-to-noise ratio and higher quantum efficiency compared to other detectors due to the current amplification effect caused by the avalanche effect in the diode. The APD may be categorized into Geiger mode and Linear mode. In the Linear mode, the reverse voltage is applied less than the breakdown voltage and the magnitude of the output current is linearly proportional to the intensity of the input light and has a gain property proportionally to the magnitude of the reverse voltage. The Geiger mode detects single photons by applying the reverse voltage which is larger than the breakdown voltage.

Furthermore, the Geiger mode according to the present invention may operate in a short-time operational Geiger mode, generate a digital output signal in response to single-photon-level inputs, and have the gain area more than 100 times greater than that of the linear mode. The reception sensitivity in the linear mode is 100 photons/1nsec, whereas in Geiger mode, it is 1 photon/1nsec, enabling single-photon detection (SAPD).

Furthermore, the laser beam used in the Geiger mode according to the present invention utilizes an infrared wavelength exceeding 1000 nm, such as above 1400 nm or within the 1550 nm wavelength band, which is higher than the wavelengths below 900 nm typically used in the linear mode. The Geiger mode operates the light source array and sensor array to transmit uniform space-filling imaging, i.e. gap-less imaging. Wavelengths exceeding 1400 nm are considered eyesafe, helping to mitigate issues related to beam divergence or distance limitations.

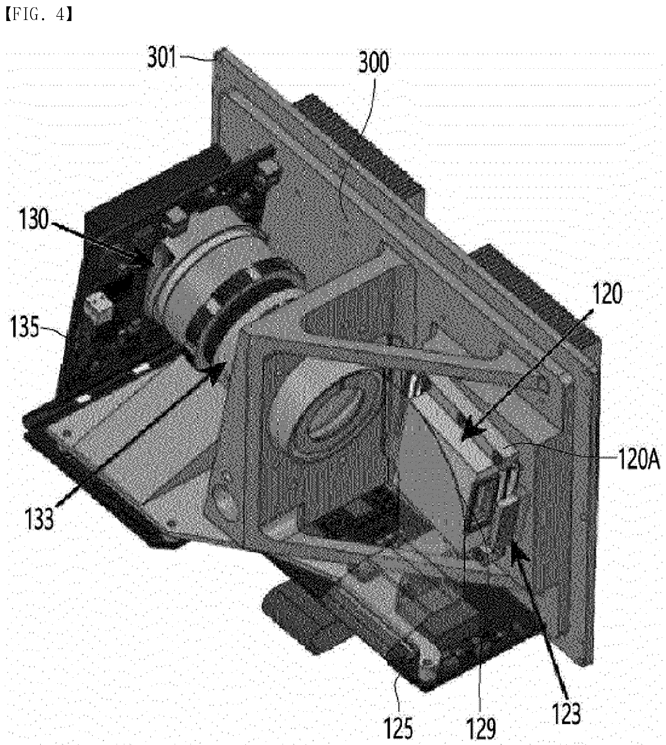

The Geiger mode according to the embodiment of the present invention is insensitive to malfunctions or defects of individual light sources due to the light source array 121 with a plurality of emitters and the sensor array 131 with a plurality of photodetectors. As shown in FIGS. 4 to 6, the LiDAR device 100 may integrally include a transmission module 120 and a sensing module 130. The LiDAR device 100 includes a transmission module 120 arranged perpendicularly in the front side of one surface of a fixed frame 300, and on the emission side of the transmission module 120, the transmission optical system 123 may be disposed in a perpendicular direction. The transmission module 120 may be connected to a transceiver interface board 125 at a lower side thereof. A driver circuit 120A may be disposed on one side of the transmission module 120.

The LiDAR device 100 include a sensing module 130 at the rear side of one surface of the fixed frame 300, and a portion of the sensing module 130, i.e. a portion of the receiving optical system 133, may penetrate and be supported by the inner wall frame of the fixed frame 300. A circuit board 135 is coupled to the rear of the sensing module 130, and may be electrically connected to the sensor array 131.

The fixed frame 300 of the LiDAR device 100 includes a heat dissipation plate 301 on a portion or a whole of another surface, and the heat dissipation plate 301 includes a plurality of heat dissipation fins to dissipate heat generated by the transmission module 120 and the sensing module 130.

The LiDAR device 100 may include a transparent protective plate 129 to protect a portion of the transmission module 120 and the sensing module 130. The protective plate 129 may be disposed on one side of the transmission module 120, and may be spaced apart from the front, i.e., the light incidence region, of the sensing module 130.

This LiDAR device 100 has a line configuration with a vertical light source array 121 and transmission optical system 123, and the transmission module 120 and the sensing module 130 are disposed to face the object in the same direction. The LiDAR device 100 rotates 360 degrees by the rotational axis of a driving motor coupled to a lower side thereof.

In the light source array 121, a predetermined number of light sources may be arranged in one or more rows in a vertical direction, such as 48 light sources arranged in two rows. These arranged light sources are disposed on a one-dimensional plane, and may emit light laterally from the LiDAR device 100. The laser beams emitted by the light source array 121 pass through the transmission optical system 123, which is configured to focus the beams on the scan region by a pattern such as a micro-lens array and to lock the desired wavelength. The driver circuit 120A may utilize short high-current pulses (e.g., 3 ~ 6 ns). Here, the transmitted pulse energy may range from ~2 $\mu$J for a ~5 ns pulse.

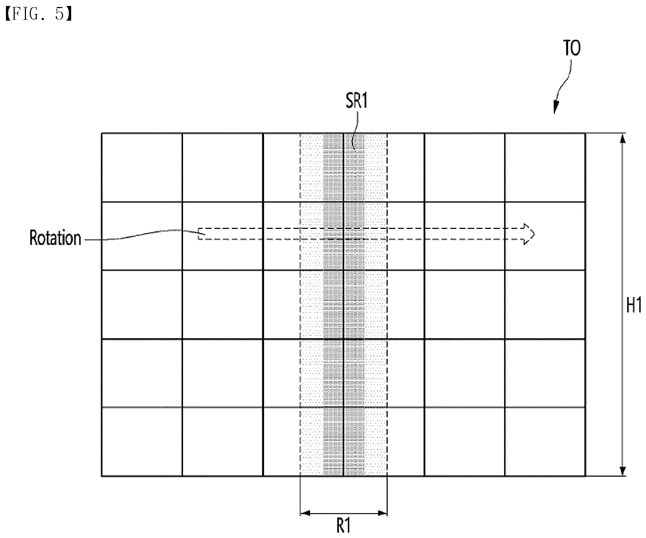

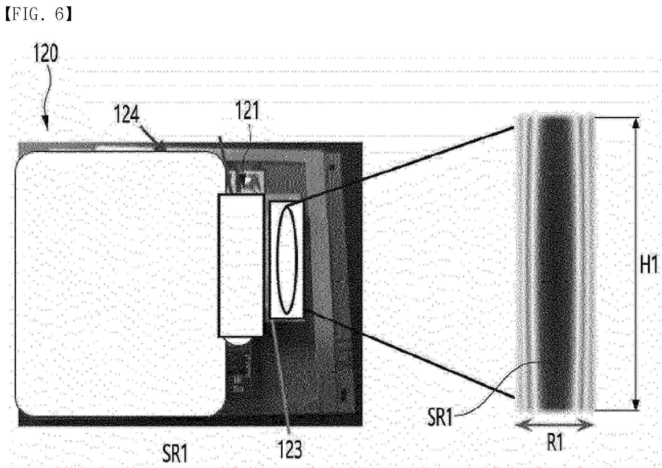

As shown in FIG. 6, a profile of the beam emitted by the transmission module 120 forms a line-shaped pattern SR1, as illustrated in FIG. 5, and a beam divergence angle R1 may be less than or equal to 1 mrad, and a vertical elevation H1 may be less than or equal to 30 degrees. The output of these light sources may be adjusted so that the emitted beam may be provided as illumination uniformly distributed toward the object by the light source array 121. The point cloud acquired using such the light source array 121 and the sensor array 131 may be classified as vertical space-filling.

Furthermore, the transmission optical system 123 is separated or spaced apart from the light source array 121 to influence the shape of the light emitted from the light source array 121, and may be provided as a monolithic optical element within the emission field. The transmission optical system 123 may be aligned to project the output of individual light sources across the entire field.

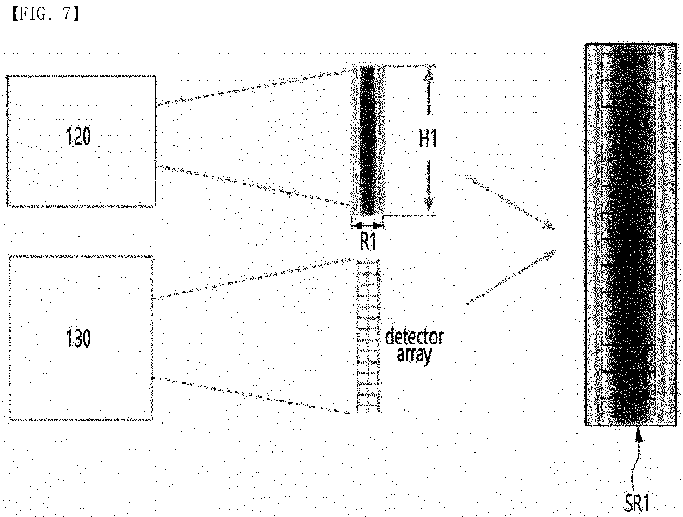

As shown in FIG. 7, the one-dimensional light source array 121 of the transmission module 120 and the one-dimensional sensor array 131 of the sensing module 130 may be aligned correspondingly. Accordingly, the LiDAR device 100 may use the data obtained from the scan region SR1 as super-pixels.

The LiDAR points form the point cloud, and super-pixels, which are created by grouping some of the points within the point cloud, may provide greater meaning or information. These point clouds include information about the shape and distance of objects. The super-pixels group the LiDAR point cloud into greater meaning units, clearly defining the boundaries of specific objects or structures by grouping adjacent points and dividing into larger regions, thereby enabling more precise object recognition and classification.

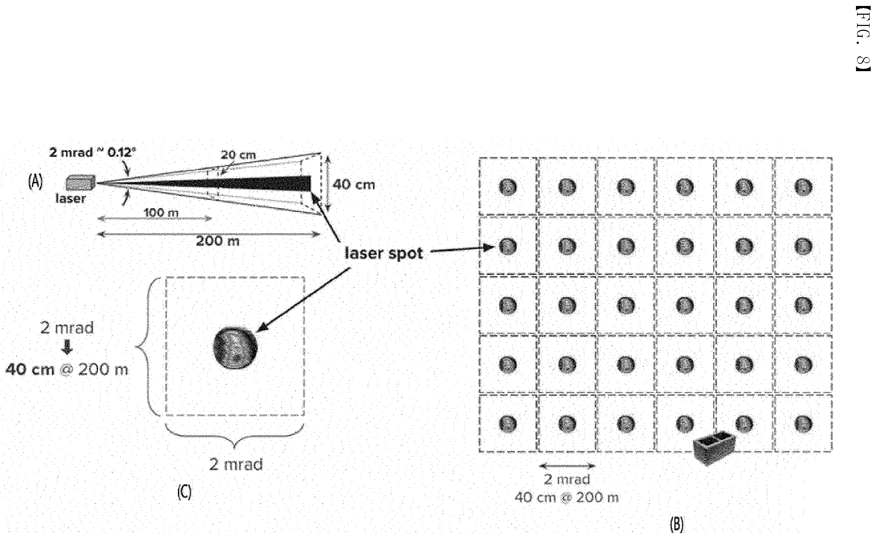

As shown in (A), (B), and (C) of FIG. 8, the linear mode of the comparative example uses dispersed laser spots and detectors, resulting in gaps between imaging points. In other words, the linear mode have large non-illuminated (or non-imaged) regions (e.g., gaps) in the scene which is not captured by the sensors due to the dispersed laser beams. Furthermore, the dispersed laser spots may be more sensitive to malfunctions or defects in individual emitters. In the linear mode, the divergence angle is 2 mrad, and the dispersed laser spots at a distance of 200 m form a scan region of 40 cm, and each of the pixel may be detected with a divergence angle of 2 mrad. The linear mode of the comparative example may not provide uniform illumination, because gaps or inconsistencies occur in the output of the laser diode array due to malfunctions or failures of individual emitters.

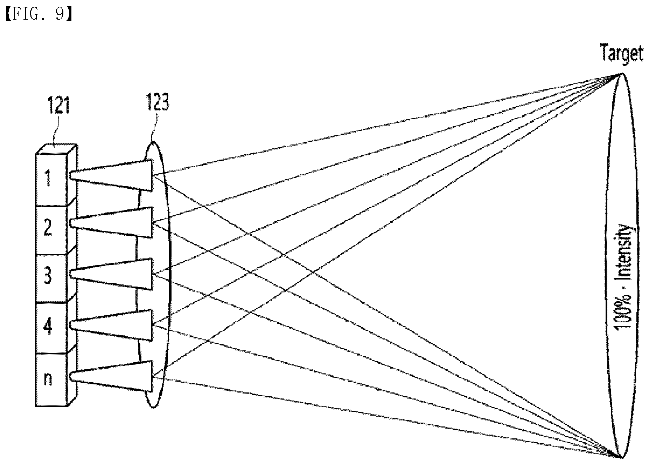

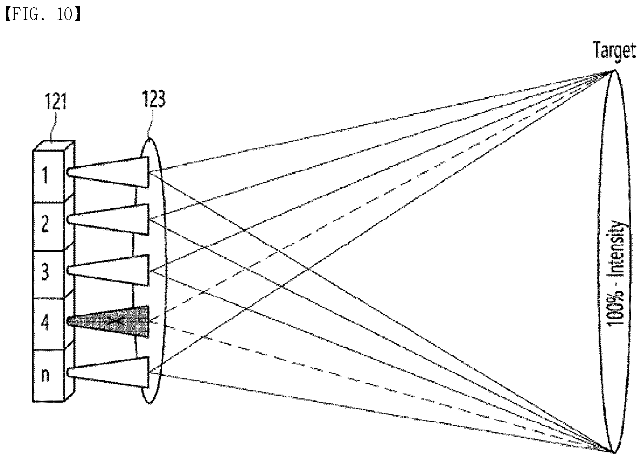

As shown in FIG. 9, the transmission optical system 123 in one example of the present invention may disperse each laser beam into uniform illumination across the entire target region. That is, all regions of the target may be illuminated with uniform output light. As shown in FIG. 10, when some light sources #4 malfunction or are disabled (inactive), the laser beams emitted by light sources different from each other may be projected onto the entire target region through the transmission optical system 123. Accordingly, the light sensitivity received across the target region may maintain a substantially uniform distribution. This configuration may ensure that even when some light sources are inactive, the overall light sensitivity remains uniform, the power reduction is minimal, and there are no gaps lost in the light field, resulting in negligible degradation in the sensitivity of the received light. This LiDAR device may minimize the impact of individual light source failures on data to improve data reliability. Furthermore, immediate service may not be requested, even though some light sources are defective.

Furthermore, the present invention may optimize trade-off between signal and resolution using super-pixels. In other words, sufficient signal strength may be secured while preserving high resolution by employing super-pixels, enabling more accurate measurements and imaging.

The LiDAR device 100 may implement horizontal space-filling by overlapping the measured point cloud data in the rotational direction, using the transmission module 120 with the vertical light source array 121 and the transmission optical system 123, and the sensing module 130 with the receiving optical system 133 and the sensor array 131.

The light source array 121 may include a plurality of light sources arranged in at least two rows. For example, the light source array 121 may be arranged in a QxP arrangement (Q and P are integers of 2 or more), and for example, may be arranged as a $2^m \times 2^n$ array, where m is 6 or more, for example, is within the range of 6 to 10, is preferably 9, and n is less than m and 2 or less, for example, is 1. Here, Q represents the number of light sources arranged vertically, and P represents the number of light sources arranged horizontally.

The light source array 121 emits one-dimensional illumination, and may cover the entire scene through rotation. In the illuminated scan region, a predetermined region may be defined as a super-pixel, such as a $2^a \times 2^b$ pixel configuration, in which a represents the number of vertical pixels, which may be less than m and within the range of 2 to 3 (preferably approximately 2.60, excluding decimals), and b represents the number of horizontal pixels, which may be less than or equal to a or equal to n (preferably 1).

Here, the vertical elevation of the super-pixel may be 2 mrad (e.g., 0.11 degrees). The divergence angle R1 of the super-pixel and the scan region SR1 may be the same, and at a target distance (e.g., 200 m), the measurement error or size of the super-pixel may be less than or equal to 16 cm (i.e., ~16 cm@200 m) or a maximum of 14 cm (~14 cm@200 m).

Horizontal space-filling may be implemented through oversampling in the horizontal (or rotational) direction at a high laser pulse rate. Here, oversampling refers to sampled data in which adjacent super-pixels overlap in at least one row. 10 or more pulses are emitted per frame, such as 13 pulses, resulting in 156 pixel samples. In other words, a single frame may be derived from 12 pixels * 13 pulses, in which the 12 pixels may be used as one point cloud. Furthermore, when the super-pixels are arranged in one row, measurements proceed 85 times (512/6), bur when in two rows, 12 pixels and 13 measurements yield 156 samples (=12*13). This measurement sample data may be defined as a single point cloud.

The LiDAR device 100 may have a transmission optical system 123 and/or a receiving optical system 133 with a FOV of 30 degrees or less, enabling full scene coverage through rotation. For example, with a single laser pulse, measurements may achieve a rotational accuracy of up to 3 cm at a distance of 200 m. Furthermore, using oversampling techniques, the LiDAR device may capture a three-dimensional point cloud of the surrounding environment. In other words, the LiDAR device may effectively detect nearby objects surrounding the short-distance and long-distance vehicle for safe detection.

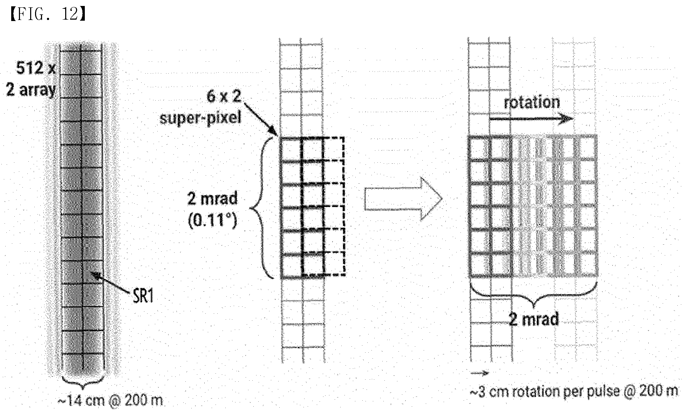

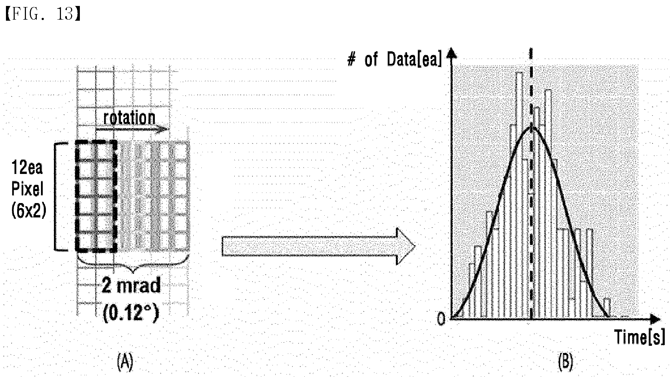

As shown in (A) of FIG. 13, 12 pixels may be measured 13 times, with rotational scanning at an angle less than 0.12 degrees (i.e., of 2 mrad) per frame, and the obtained data may be represented as histogram bins, as shown in (B) of FIG. 13.

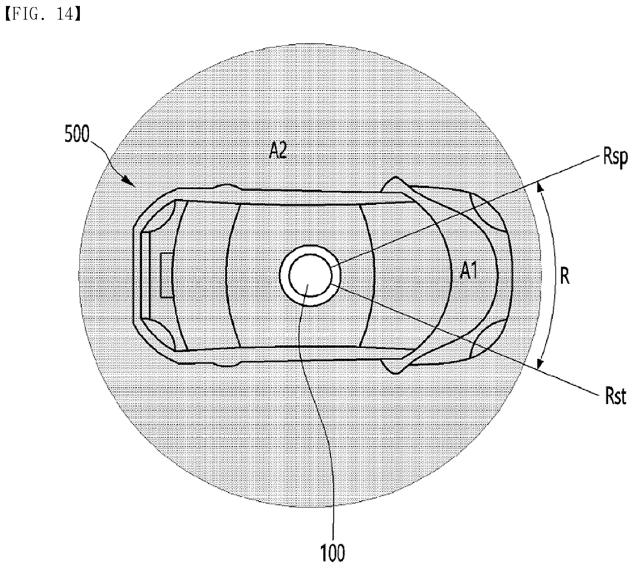

In another example of the present invention, as shown in FIG. 14, a moving object such as a vehicle 500 may separate priorities based on the rotational scan region of the LiDAR device 100, and processing resources and power consumption may be reduced when generating large amounts of data.

The LiDAR device 100 may divide the FOV into at least two areas A1 and A2 and allocate separate resources between the two areas. The division may occur during acquisition, such as based on the location or range of the acquired data, grouping or segmenting the data into a plurality of groups or swaths. In other words, a first area A1 may be a high-priority region or a region of greater relevance requiring more detailed analysis in aspect of processing. At least one other area, such as a second area A2, may be a low-priority region to which one processing is applied relatively less frequently.

The second area A2 with low-priority may be used for data logging purposes. In contrast, the first area A1 with high-priority may be monitored by a sub-backup controller that does not require monitoring of all areas. That is, this allows computational resources to be used more efficiently for monitoring the first area A1. Under normal operation, the first area A1 with high-priority may correspond to a frontal region of the vehicle. However, when dividing the FOV in the second area A2 with a different priority, the high-relevance area may be adjusted to be oriented in a meaningful direction, and that is, it is important for the high-relevance area to maintain a correct pointing angle.

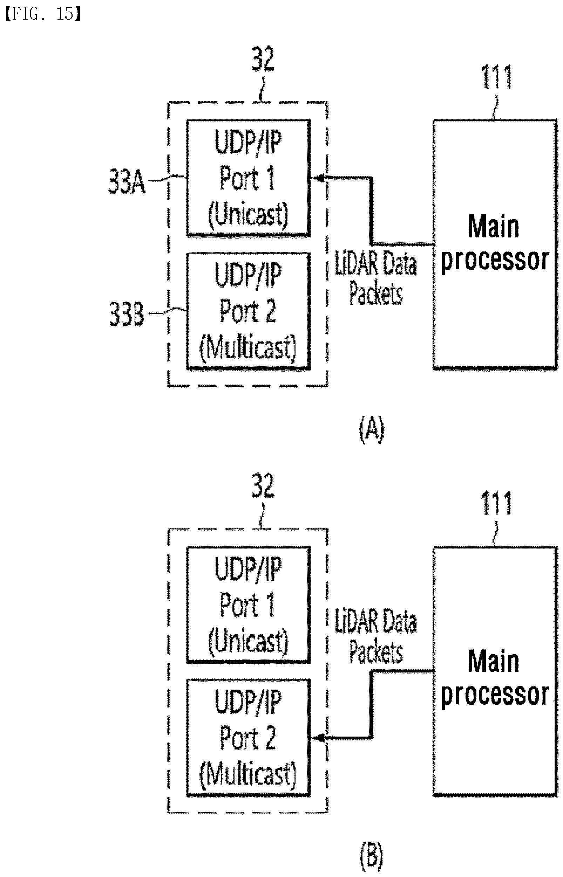

LiDAR data packets obtained from the first area A1 with the high-priority are routed to a multicast communication port. LiDAR data packets within the multicast angle range defined by the start angle $R_{st}$ and stop angle $R_{sp}$ of the azimuth R may be routed to a multicast UDP/IP end-point instead of a unicast UDP/IP end-point, as shown in FIG. 15.

The present invention may provide methods to ensure and stabilize pointing angles as follows. For example, as shown in (A) of FIG. 15, the main processor 111 may communicate LiDAR data packets with a network via the first communication port (UDP/IP Port1) 33A and the second communication port (UDP/IP Port2) 33B, and may transmit or receive LiDAR data packets, i.e., 3D data. That is, sensor data division or grouping may be implemented using multicast functionality. The multicast function generally allows a subset of unicast LiDAR data packets (e.g., UDP packets) to be routed to alternative subjects (e.g., IP addresses and UDP ports). Furthermore, LiDAR data packets received from the second area A2 out of the azimuth range may be under unicast along with other data, such as Geiger-mode avalanche photodiode ("GmAPD") data and status packets. In another example, different areas may be sector-shaped segments of a circular region.

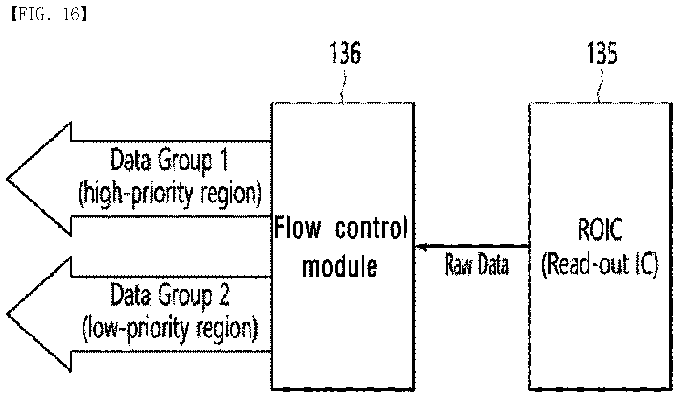

As shown in FIG. 16, data division may be implemented through a flow control module 136 that generates groups or swaths from raw data produced by the LiDAR device 100. The flow control module 136 may use criteria such as azimuth to form at least two data groups from the raw data received by the LiDAR device. The raw data may refers to data from the readout interface of an imaging device, such as a readout interface circuit (ROIC) 137. The range for a given group or sample may be specified by setting limits for the corresponding region which are defined with two azimuth angle values designating a start limit and a stop limit. Alternatively, a single azimuth angle value may be defined, and then the number of sensor frames calculated from the azimuth value may be designated. The flow control module 136 and the ROIC 137 may be integrated into the processor.

The rotational scanning motion of the LiDAR device may be synchronized with a master clock of a moving object system or vehicle system. For instance, the rotational scanning motion of the LiDAR device 100 may be synchronized with the master clock of a system such as the Precision Time Protocol ("PTP") grandmaster in a SDS(Self-Driving System).

Alternatively or additionally, the present invention allows at least one shutter control among cameras of a vehicle (e.g., autonomous vehicles (AVs)) to be synchronized with the system's master clock or the rotational scanning motion of the LiDAR device. For instance, there may be a global shutter in the camera unit 101 (refer to FIG. 2) or sensor and the global shutter may be synchronized with the LiDAR scanning motion. Thus, the camera unit 101 may be controlled to ensure the shutter of the camera unit 101 is synchronized with the rotation of the LiDAR device 100. For this purpose, the timing or clock of the LiDAR device 100 may be synchronized with PTP. Similarly, the shutter signal of the camera unit 101 may be synchronized with the PTP of the SDS. This ensures that images captured by the camera unit 101 are synchronized with the capture representation (form or method) of the LiDAR device 100, and thereby the combination of LiDAR data and camera images may be improved. Accordingly, synchronization between the data output stack of the LiDAR device (e.g., a 3D map) and the vision stack of the autonomous vehicle (video from the camera unit) may be improved, and thereby environmental detection functionality by self-driving system (SDS) may be improved and computational bandwidth may be improved by aligning the two output stacks.

Additionally or alternatively, in the present invention, a pointing angle of the camera unit 101 and/or the LiDAR device 100 may operate in an azimuth lock mode controlled over time. The azimuth lock mode is a mode that is fixed in a specific azimuth angle or angle to collect data. In this mode, the LiDAR device may rotate to the specified azimuth angle to collect data, thereby acquiring or tracking information in specific directions more precisely. The field of view of the LiDAR device in the azimuth lock mode may be fixed at an azimuth angle relative to a fixed reference plane. That is, the azimuth of the LiDAR sensor may be controlled within predetermined values or ranges. The present invention may suppress or prevent position drift at pointing angles of the LiDAR device (e.g., mechanical optical sensors such as LIDAR) by control of the azimuth lock mode. The position drift refers to changes in position or direction, indicating a deviation from the target position or direction. Accordingly, without the azimuth lock mode, the position drift may cause undesired rotation, and may cause movement to the undesired pointing angle. Thus, the present invention allows more accurate adjustment of the consistent pointing angle for LiDAR which is the rotation imaging device. Furthermore, the LiDAR device may capture desired targets or regions more accurately, thereby maintaining the stability and precision of the system.

More specifically, the measurement system 110 (refer to FIG. 2) or the main processor 111 of the LiDAR device 100 may control the rotational speed and/or angular position to minimize position drift within an angle range in which the pointing angle is stabilized. Additionally, the measurement system 110 (refer to FIG. 2) or the main processor 111 may synchronize the rotation by the driving unit 150 (refer to FIG. 2) with PTP time. For example, the azimuth angle may be controlled within $\pm 5°$ during operation. Preferably, the azimuth phase angle may be controlled within $\pm 2°$, and the azimuth is in a range which is suitable for accurately capturing the position and direction of the frontal area of the vehicle.

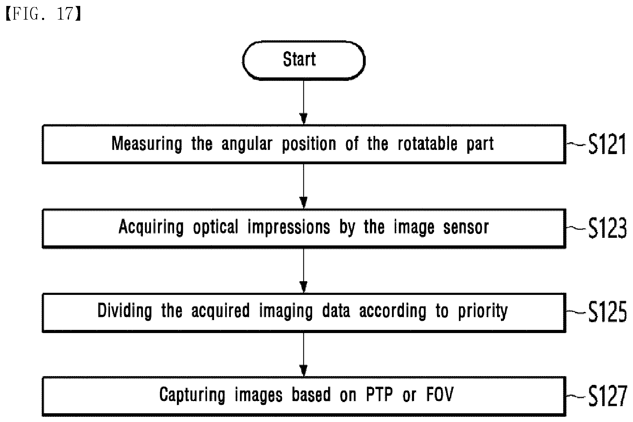

As shown in FIG. 17, a method for improving image data obtained by the LiDAR device includes measuring the angular position of the rotatable part in operation S121, acquiring optical impressions by the image sensor of the sensor array based on the measured data in operation S123, dividing the acquired imaging data according to priority in operation S125, and capturing images of the prioritized region among divided regions based on PTP or FOV in operation S127. The dividing of the acquired imaging data may group and divide the imaging data based on the angular position or scanning range at which the data is acquired. When capturing optical impressions using the image sensor, the capturing is performed in response to a trigger signal, and the trigger signal may be generated in response to the angular position being aligned for a reference point.

Furthermore, as a method for synchronizing the capture of acquired imaging data with the rotational movement of a rotation imaging device, i.e., a LiDAR device, the rotational movement and the capture of imaging data may be adjusted or synchronized through the same system clock. Additionally, as a method for acquiring optical impressions using a LiDAR which is a rotation imaging device, the rotational movement may be adjusted or synchronized with a system clock, such as a precision time protocol. The FOV of the LiDAR device may be controlled relative to the azimuth angle, and for instance, when acquiring imaging data, the azimuth angle may be set or maintained consistently. In this case, the rotational scan speed of the LiDAR device and/or angular position of the device may be controlled to minimize position drift within the FOV range.

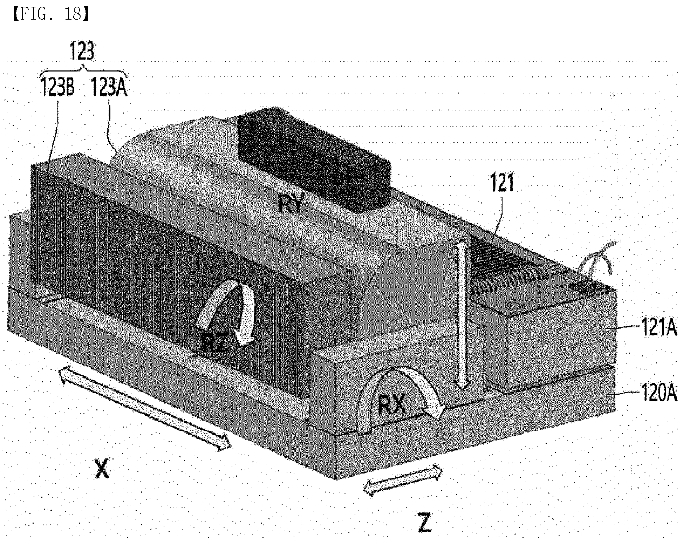

As shown in FIG. 18, the transmission module 120 according to the embodiments of the present invention includes a light source unit 121A with a light source array 121 and a transmission optical system 123 with a collimating lens 123A and a volume bragg grating (VBG) lens 123B, all arranged on a substrate 120A. The collimating lens 123A may have a convex curved shape on the emission side, and extend longitudinally along the long axis Y of the light source array 121. The collimating lens 123A may refract the incident light in parallel, and the VBG lens may directly emit or focus light of a specific wavelength, and particularly may adjust a light path in a desired direction.

The high sensitivity of the sensor array 131 allows the sensor array 131 to detect faint signals returned from distant objects, but the high sensitivity to optical signals may provide precise alignment of components within the laser pulse emission path of the transmission module 120. Therefore, the proposed LiDAR device 100 and the method for controlling the same according to the present invention provide active optical alignment of the transmission module 120 and the sensing module 130 to improve production tolerances and increase a manufacturing yield.

To this end, the light source unit 121A with the light source array 121, the collimating lens 123A, and the VBG lens 123B of the transmission module 120 may adjust a plurality of linear and rotational axes x/y/z/Rx/Ry/Rz to find the optimal region scan or angular position. The collimating lens 123A and/or the VBG lens 123B may include motors on either side of each axis to move along three-dimensional axes X, Y, and Z, or may be connected rotatably Rx, Ry, and Rz around respective axes X, Y, and Z. Thus, independent driving control for each component may be performed to find the optimal position for each axis, enabling region scanning. That is, active alignment is required to find the optimal position of the components in the transmission optical system, and two main challenges that may be caused in relative to alignment are the follows. 1) Defining the optimal position using non-independent parameters, and 2) efficiently reaching the optimal position in a coupled axis system. Here, multi-axis is needed to be adjusted to find the optimal position for active alignment, and there is a strong axis coupling effect in actual production conditions, which may be caused by alignment equipment limitations, process variations, or internal physical mechanisms of the optical system.

The present invention provides at least two main methods for solving these technical problems: 1) a new algorithm to identify the optimal position; 2) an efficient scanning method. These methods help achieve high yield and fast processing times.

FIGS. 19 to 24 may be referred in regard with the region scanning method for finding the optimal position in a LiDAR device according to the embodiments of the present invention. (A) and (B) of FIG. 19 illustrate the examples of the application of a nonlinear merit function-based region scanning algorithm, and (A) and (B) of FIG. 20 illustrate the examples of a linear merit function-based region scanning algorithm. In (A) and (B) of FIG. 19, the parameters of the first axis (A-axis) and the second axis (B-axis) achieve performance within specific specifications. For instance, in the condition of the specification of the first axis parameter > 0.88, the second axis parameter > 30 dB), the performance may be achieved. Furthermore, in the presence of external noise (refer to (B) of FIG. 19), the resistance to noise may be improved due to the direction of the driving force.

As shown in (A) and (B) of FIG. 20, when applying linear merit function-based scanning algorithm, it may be known that the positions depart from the specific specification within the first axis (A-axis) parameter which is vertical and the second axis (B-axis) parameter which is horizontal in the scan region. For instance, the scan positions depart from the specifications (A-axis parameter > 0.88, B-axis parameter > 30 dB), and instead fall within A-axis parameter < 0.88 and/or B-axis parameter < 30 dB. That is, the linear merit function does not provide independent configurations for the various parameters required to quantify optical performance, thereby having difficulty in independent active alignment of the parameters. In other words, when assigning weight to one parameter, other parameters may depart from specifications, and also when using gradient descent method for region scanning to find the optimal position, resistance to external noise may be reduced. These problems make it challenging to determine the optimal parameters for active alignment.

The present invention may provide better performance, when using a nonlinear merit function for region scanning. Specifically, the present invention avoids placing excessive weight on a single specific parameter, ensures that the region scanning may be performed while the selected position achieves performance within specifications, and performs region scanning in an adapted direction where driving force is applied, thereby being robust against external noise, resulting in enabling optimal position calculation.

FIG. 21 is a view illustrating an example of fine line scan according to an embodiment of the present invention. In other words, fine line scan is performed after region scan to find a final position. This method for the region scan involves a trade-off between time and accuracy. When fine scan steps are required to achieve high accuracy, the scanning process becomes very time-consuming, and improving slow scanning time in order to increase step size decreases accuracy.

As shown in (A) of FIG. 22, the region scanning method which scans positions along the second axis (B-axis) for each first axis (A-axis) may increase scan steps or time, thereby reducing scanning efficiency. As shown in (B) of FIG. 22, the present invention identifies positions through scanning along the combined directions of the first and second axes (A and B axes) by a linear interpolation method. The linear interpolation may construct the surface shape as a grid structure and may generate a digital surface model of the grid, enabling the collection of more precise spatial and distance information. Here, the first axis may represent the vertical direction for the scan region, and the second axis may be a horizontal direction orthogonal to the first axis.

As shown in FIG. 23 and (B) of FIG. 22, a first step may scan the second axis parameter when the first axis parameter is at the reference position (A = 0) to identify the optimal position, a second step may scan the second axis parameter when the first axis parameter is at the left side of the reference position (A = - 11,000 arcsec) to identify the optimal position, a third step may scan the second axis parameter when the first axis parameter is at the right side of the reference position (A = + 11,000 arcsec) to identify the optimal position, a fourth step may interpolate the optimal positions obtained from the first to third steps using linear interpolation, scanning along the A-axis parameter to identify optimal positions, and a fifth step may perform the fine line scanning for the optimal positions obtained by the fourth step along the second axis parameter which is perpendicular to the first axis to identify the optimal positions. In other words, the fine line scanning method using linear interpolation scans the second axis parameter at the reference position (0) for the first axis parameter, and scans the second axis parameter at a position 3 degrees before the reference position (-11,000 arcsec), and scans the second axis parameter at a position 3 degrees after the reference position (+11,000 arcsec). While scanning positions are set to two opposite sides of the reference position in this case, three or more scanning positions may be set. Furthermore, scanning positions are set to degrees before or after the reference positions, but the scanning positions may be selectively set within a range of 1 to 7 degrees or be selectively performed within a range of 3 to 7 degrees. After at least three scanning positions are obtained, linear interpolation is applied to these three positions to interpolate along the directions of the first and second axes for line scanning. This scanning method using linear interpolation extracts the first and second axis parameters separately and combines the parameters to find the optimal position.

Also, the present invention discloses a system and a method that uses a function-based line scan operation to replace region scanning by performing active optical alignment. As shown in FIG. 23, similar to the linear interpolation method, initial scanning is performed at two positions, and a third scan may be performed to enhance accuracy. When there is a quadratic function at the peak position, scanning for the third position may be performed, and a nonlinear scanning path may be set. That is, the quadratic function-based line scan interpolated through the initial 3-line scan, i.e., the line scan using a non-linear function, may determine alignment positions along the scanning path. Here, the function-based scanning method may be generated based on initial line scanning and physical mechanisms. The number of line scans may be determined by the fitting parameters needed to describe the peak position. The transmission module and the main processor of the LiDAR device conduct time-differentiated line scans in the horizontal (i.e., rotational) direction and vertically interpolated scans using a nonlinear function and may use the scanned data to determine the optimal position.

The scanning method using a nonlinear function algorithm may improve yield, reduce manufacturing losses and damages, and enhance processing time and accuracy for determining the optimal position. Furthermore, the scanning method may provide fast scanning for optimal positioning.

As shown in FIG. 25, the main processor 111 may include a data acquisition unit 11A, a pre-processor 11B, a histogram circuit 11C, a filter 11D, a timing circuit 11E, a window circuit 11F, a sub-histogram extraction unit 11G, and a waveform analyzer 11H.

Referring to FIGS. 25 and 26, the data acquisition unit 11A collects raw LiDAR data detected by the sensor array 131 of the sensing module 130, i.e., Geiger-mode APD data in operation S101. In other words, the acquired 3D point cloud data may be spatially and temporally collected as super-pixels. The LiDAR device may use fixed pixel sizes (angular resolution) and fixed amounts of raw data per point, acquiring broad 3D information in the form of point clouds and grouping some points into super-pixels.

The pre-processor 11B removes distortions in the raw data of each collected pixel. Specifically, the pre-processor 11B may remove noise from the point cloud, or may pre-process the sampled data for intended purposes in order to align data acquired from different positions in operation S102.

The pre-processor 11B classifies events in the raw data of each pixel, and performs binning, and the binning refers to the process of grouping data into clusters, representing the process of dividing the data into manageable sizes, and sorting the data in chronological order.

Here, TOF_bin is calculated using the following formula:

$$TOF\_bin = (gate\_delay - signal\_delay) + raw\_bin$$

gate_delay: indicates the delay between the time a signal is generated and the time the signal is received.
signal_delay: indicates the delay occurring while the signal is being transmitted.
raw_bin: the value obtained by binning the initial time measurement result.

In other words, TOF_bin is a value obtained by correcting the initial time measurement result, considering the speed and delay of the signal, and may be processed as a value capable of precise distance or position measurement. The pre-processor 11B outputs TOF bin data aligned with laser pulses.

The histogram circuit 11C classifies the raw data into various types of events. Here, using the previously calculated TOF bin data, the raw data is converted into histograms for different events in operation S103. The entire or downsampled histogram data is stored in memory. Furthermore, the histogram data stored in memory may be cleared as soon as the histogram data is read.

The TOF data for each light pulse output from the pre-processor 11B is stored in a buffer or internal memory 41 (refer to FIG. 28) through the FIFO (First-In, First-Out) method in operation S106, and the buffer or internal memory outputs TOF bin data in an input order thereof. When the raw data is converted into histograms, copies of the raw data are buffered.

The timing circuit 11E controls the timing of emission and the timing of control of laser beam, to detect the transmission and reception times of pulses. In other words, the timing circuit 11E controls the timing for calculating the distance to an object.

The window circuit 11F identifies specific windows for performing filtering through the histogram data in operation S104. The window circuit 11F may accumulate counts for photon detected across time windows corresponding to subsets of pulses from a multi-pulse sequence. The window circuit may detect time intervals for pulse detection, and may detect data with specific time lengths.

The filter 11D may remove noise from the histogram data or extract meaningful peaks in operation S105. Specifically, the filter 11D distinguishes noise or peaks based on histogram distribution to extract the signal with the highest peak. The filter 11D may be applied to extract targets from histograms of avalanche events and desired events. Here, the returned target is a histogram bin window regarded as that extraction range of targets is within the span of the window. That is, the filter find and estimates specific targets from the given data.

The sub-histogram extraction unit 11G visualizes data distribution, using a span histogram in operation S107. That is, the sub-histogram extraction unit 11G divides histogram peak data and TOF data into specific bins and extracts graphs that represent the frequency of data within each bin. This allows simultaneous understanding of the distribution shape in specific sections of the histogram data and the overall data distribution. That is, the sub-histogram extraction unit 11G receives peak data from the filter 11D and histogram data copied via the buffer, and extracts more information about the estimated target using high-resolution histogram data in the peak-included region. Additionally, the sub-histogram extraction unit 11G may reconstruct portions of high-resolution histograms based on the peaks. The sub-histogram extraction unit 11G may operate repeatedly, to output LiDAR data.

The sub-histogram extractor 11G may reconstruct sub-histograms within the global maximum position and radial time range where the stored raw data is defined by the local peak detection radius at the highest possible time resolution when each peak with statistical significance is detected by the filter. That is, the sub-histogram extraction unit 11G identifies the sub-histograms of the span in which the target position is estimated. However, to process the next group of histogram data, memory (BRAM) 42 is required to be cleared, so the histogram may not be stored until a peak is found. To address this, the pre-processor 11B broadcasts TOF values, which are the output of the buffer 41 (refer to FIG. 28), to both the histogram circuit 11C and buffer 42, to enable the sub-histogram extraction unit 11G to use the TOF values.

The waveform analyzer 11C determines the precise range of the target within the data range extracted by the sub-histogram extraction unit 11G. In other words, the waveform analyzer 11C outputs LiDAR data with the highest peak through a streaming interface.

Here, regarding the sub-histogram extraction unit 11G, the signal processing that passes through the pre-processor 11B and the histogram circuit 11C may be defined as the first pre-processed output, and the signal processing buffered and output via the pre-processor 11B and the internal memory may be defined as the second pre-processed output. The sub-histogram extraction unit 11G may detect at least one peak with statistical significance within the first pre-processed output, and the waveform analyzer may generate a target waveform based on the correlation between the at least one detected peak and the time data points corresponding to the buffered second pre-processed output. Subsequently, the buffered second pre-processed output data is deleted.

As shown in FIGS. 27 and 28, regarding the recording and reading operations of histogram data, new TOF data is received in a standby state in operation S111, and it is determined whether the TOF data is valid in operation S112. When the TOF data is valid, the histogram data is recorded in the internal memory through the first port in operation S113. Specifically, the histogram value for the time bin in the internal memory 41 is read and recorded while being incremented by one, using the same port for both actions. When the TOF data is invalid, whether new TOF data is received is checked.

Whether the histogram data recording operation is completed is checked in operation S114, and when completed, the histogram data recorded in the internal memory is read in operation S115, and when not completed, checking whether new TOF data is received follows. Here, during the histogram reading operation, the histogram values recorded in internal memory are read through the first port (Port A). Also, the histogram data which is read is deleted through the second port (Port B). This process is repeated to complete the histogram reading operation in operation S116.

As shown in FIG. 28, when TOF data is input from the buffer 41, communication with the internal memory (BRAM) 42 may be conducted through dual ports (Port A and Port B) to read data through one port, and delete the read data through the other port. In this case, reading the histogram values may occur within one-clock cycle without a two-clock delay. Here, the internal memory 42 may be implemented as block RAM (BRAM), and may be implemented as being within the main processor 111, i.e., the FPGA, and the histogram data may be processed in parallel for reading and deleted.

FIG. 29 is a timing diagram showing a flow for reading and deleting histogram data in the internal memory 42 via the histogram circuit in FIG. 28.

In FIG. 29, dout_a may represent the frequency of histogram data belonging to specific intervals, and express the frequency of each interval as bar heights to visualize the distribution of data. wren_a represents the width of each interval, and while the histogram calculates the frequencies with dividing into intervals of continuous data, and the width of each interval is represented. din_a represents which interval within the histogram the data belongs to. The histogram data hist0 to hist6 may be stored and deleted by values of bins bin0 to bin7 based on clock cycles and address addr_a.

One or more peaks may be determined from the histogram circuit, and the one or more peaks may be determined to calculate TOF of major peaks, or TOF of minor peaks. The peaks may be detected based on the number of event counts in a single bin or detected after smoothing out the collected histogram.

FIG. 30 is a view illustrating the oversampling operation for super-pixels according to an embodiment of the present invention. As shown in FIG. 30 and 25, a plurality of adjacent super-pixels share operational resources. For example, the first to the fourth super-pixel may be proceeded through buffering by the buffer over time, pre-processing by the pre-processor 11B, histogram operations by the histogram circuit 11C, histogram filtering by the filter 11D, secondary sub-histogram extraction by the sub-histogram extraction unit 11G, and high-resolution LiDAR data extraction by the waveform analyzer 11H.

The sub-histogram output from the sub-histogram extraction unit 11G may be visualized through the streaming interface, as shown in FIG. 31, and may be output with an interval width for 12 data, i.e., a span size (hist(b) to hist(b+11)). As shown in FIG. 32, the histogram filter outputs filtered data and 12 histogram data points (hist_word 0-11) along each starting bin, following an alternative approach method.

The main processor 111 integrates spatial and temporal data to generate LiDAR data, i.e., sensing data of the GmAPD. The raw LiDAR data is converted into a histogram before processing. In order to distinguish signals from noise in the LiDAR data, the histogram filter 11D is applied to the histogram for statistically significant peaks, allowing the separation of signals and noise. Furthermore, once the histogram peaks are distinguished, high-resolution histogram data of the region which is included in the histogram peak may be used to extract additional information about any target for estimation. Due to the high speed of GmAPD data and FPGA resource constraints, real-time processing requires optimization. Accordingly, the embodiment of the present invention includes a system and DSP optimization methodology that improves performance without degrading data quality. In some aspects, a multi-step histogram method that allows partial reconstruction of high-resolution histograms only in the region of interest is disclosed.

The features, structures, and effects described in the embodiments above are included in at least one embodiment of the present invention and are not necessarily limited to a single embodiment. Furthermore, the features, structures, and effects exemplified in each embodiment may be implemented with being combined or modified for other embodiments by those skilled in the art. Therefore, such combinations and modifications should be interpreted as being included within the scope of the present invention. Furthermore, although the embodiments have been primarily described above, they are merely examples and do not limit the present invention, and those skilled in the art may recognize that various modifications and applications not exemplified above are possible without departing from the essential characteristics of the present embodiment. For example, each component specifically described in the embodiments may be implemented in a modified form. And differences related to such modifications and applications should be interpreted as being included within the scope of the present invention, as defined by the appended claims.

## Claims

1. A LiDAR device, comprising:

    a data collection unit that collects raw data generated based on an optical signal reflected from an object;
    a pre-processing unit that removes noise from the collected data;
    a histogram circuit that converts an output of the pre-processing unit into histogram data;
    a buffer that buffers the output of the pre-processing unit;
    a sub-histogram extraction unit that receives the converted histogram data and the buffered data and detects at least one peak from the histogram data to generate peak data; and
    a waveform analyzer that generates a target waveform based on a correlation between the at least one peak data and the buffered data.

2. The LiDAR device according to claim 1, wherein data stored in the buffer is recorded by the sub-histogram extraction unit, and then deleted.

3. The LiDAR device according to claim 1, further comprising a filter that extracts a peak through the converted histogram data.

4. The LiDAR device according to claim 3, further comprising a window circuit that identifies a window for performing filtering on the converted histogram data within the filter.

5. The LiDAR device according to any one of claim 1 to 4, wherein the histogram circuit and the sub-histogram extraction unit record, read and delete the histogram data through an internal memory and a dual port.

6. The LiDAR device according to any one of claim 1 to 4, wherein a buffering by the buffer and a pre-processing by the pre-processing unit oversample a plurality of adjacent super-pixels.

7. The LiDAR device according to any one of claim 1 to 4, further comprising a Geiger mode APD that generates the raw data.

8. The LiDAR device according to claim 7, wherein the LiDAR device is a rotating imaging device.

9. The LiDAR device according to claim 8, further comprising:

    a plurality of light source arrays which are vertically arranged; and
    a transmission module having a transmission optical system disposed on an emission side of the light source arrays.

10. The LiDAR device according to claim 8, wherein the rotating imaging device rotates in synchronization with a master clock of a system in a vehicle.

11. A LiDAR device, comprising:

    a light source array that generates a light pulse and has a plurality of light sources which are arranged in at least two rows;
    a transmission optical system that is disposed on an emission side of the light source array and refracts light toward an object;
    a sensor array that senses a light pulse reflected from a scan region of the object and has a plurality of photodetectors;
    a receiving optical system disposed on an incidence side of the sensor array; and
    a main processor that acquires 2a x 2b (a=2~3, b<a) pixel of the scan region along a rotational direction and captures a three-dimensional point cloud through oversampling which overlaps at least one adjacent row of the acquired super-pixels.

12. The LiDAR device according to claim 11, wherein the LiDAR device has a field of view of 30 degrees or less.

13. The LiDAR device according to claim 11, wherein the super-pixels comprise 12 pixels arranged in two rows, and the LiDAR device rotates at an angle of 2mrad per frame.

14. A method for controlling a LiDAR device, comprising:

    receiving and pre-processing raw LiDAR data;
    converting the pre-processed output into a histogram;
    buffering the pre-processed output;
    detecting a peak from the output converted into the histogram; and
    generating a target waveform based on a correlation between the detected peak and a time data point corresponding to the buffered output.

15. The method according to claim 14, further comprising reading and then deleting the buffered data.

16. The method according to claim 14, wherein the pre-processing comprises oversampling at least one row of a plurality of super-pixels acquired in a rotational direction.

17. The method according to claim 14, wherein the LiDAR device determines a position through a plurality of line scans with time differences in a rotational direction and a scan interpolated by a non-linear function in a vertical direction.

【FIG. 1】

【FIG. 2】

## 200

| 215 | 213 | 211 | 212 | 101 |
|---|---|---|---|---|
| Communication unit | Remote device | User interface | Vehicle control module | Camera unit |

220 —

221 — Sub-memory

222 — Storage device

**Measurement system**

110 —

| Main processor | Main memory |
|---|---|

111    112

Driving unit — 100

150

130 — **Sensing module**

131 — Sensor array

133 — Receiving optical system

**Transmission module** — 120

Light source array — 121

Transmission optical system — 123

L2

L1

【FIG. 3】

200

100

121  123  L1

131  TO

133  L2

【FIG. 4】

【FIG. 5】

【FIG. 6】

【FIG. 7】

【FIG. 8】

【FIG. 9】

【FIG. 10】

【FIG. 11】

【FIG. 12】

【FIG. 13】

(A)

(B)

【FIG. 14】

【FIG. 15】

(A)

(B)

【FIG. 16】

【FIG. 17】

```
                          ┌─────────────┐
                          │    Start     │
                          └─────────────┘
                                 │
                                 ▼
┌──────────────────────────────────────────────────────┐
│   Measuring the angular position of the rotatable part │  ─S121
└──────────────────────────────────────────────────────┘
                                 │
                                 ▼
┌──────────────────────────────────────────────────────┐
│      Acquiring optical impressions by the image sensor │  ─S123
└──────────────────────────────────────────────────────┘
                                 │
                                 ▼
┌──────────────────────────────────────────────────────┐
│     Dividing the acquired imaging data according to priority │  ─S125
└──────────────────────────────────────────────────────┘
                                 │
                                 ▼
┌──────────────────────────────────────────────────────┐
│          Capturing images based on PTP or FOV          │  ─S127
└──────────────────────────────────────────────────────┘
```

【FIG. 18】

【FIG. 19】

【FIG. 20】

【FIG. 21】

【FIG. 22】

【FIG. 23】

【FIG. 24】

Initial 3 line scans

【FIG. 25】

111

| 11A | Data acquisition unit |
|---|---|
| 11B | Pre-processor |
| 11C | Histogram circuit |
| 11D | Filter |
| 11E | Timing circuit |
| 11F | Window circuit |
| 11G | Sub-histogram extraction unit |
| 11H | Waveform analyzer |

【FIG. 26】

【FIG. 27】

【FIG. 28】

【FIG. 29】

**[FIG. 30]**

| | t0 | t1 | t2 | t3 | t4 | t5 | t6 | t7 |
|---|---|---|---|---|---|---|---|---|
| Super-Pixel 0 | Pre-Processing BRAM | Histogramming BRAM | Histogram Filter | 2nd Stage Sub Histogram | Waveform Analyzer | | | |
| Super-Pixel 0 | Buffering | Pre-Processing BRAM | Histogramming BRAM | Histogram Filter | 2nd Stage Sub Histogram | Waveform Analyzer | | |
| Super-Pixel 0 | Buffering | Buffering | Pre-Processing BRAM | Histogramming BRAM | Histogram Filter | 2nd Stage Sub Histogram | Waveform Analyzer | |
| Super-Pixel 0 | Buffering | Buffering | Buffering | Pre-Processing BRAM | Histogramming BRAM | Histogram Filter | 2nd Stage Sub Histogram | Waveform Analyzer |

[FIG. 31]

【FIG. 32】

## INTERNATIONAL SEARCH REPORT

| International application No. |
| --- |
| **PCT/KR2023/012306** |

### A. CLASSIFICATION OF SUBJECT MATTER

**G01S 7/4861**(2020.01)i; **G01S 17/89**(2006.01)i; **G01S 17/931**(2020.01)i; **G01S 7/481**(2006.01)i; **G05D 1/02**(2006.01)i

According to International Patent Classification (IPC) or to both national classification and IPC

### B. FIELDS SEARCHED

Minimum documentation searched (classification system followed by classification symbols)

G01S 7/4861(2020.01); G01S 17/08(2006.01); G01S 17/10(2006.01); G01S 17/931(2020.01); G01S 7/02(2006.01); G01S 7/38(2006.01); G01S 7/48(2006.01); G01S 7/4863(2020.01); G01S 7/4865(2020.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라이다(lidar), 타겟(target), 히스토그램(histogram), 피크(peak), 상관 관계 (correlation)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2022-0069930 A (OUSTER, INC.) 27 May 2022 (2022-05-27)<br>See paragraphs [0030]-[0059] and [0163]-[0245], claim 21 and figures 1a-4 and 23-30. | 1-17 |
| A | KR 10-2021-0153563 A (SAMSUNG ELECTRONICS CO., LTD.) 17 December 2021 (2021-12-17)<br>See paragraphs [0041]-[0072] and figures 1-3. | 1-17 |
| A | KR 10-2022-0042202 A (OUSTER, INC.) 04 April 2022 (2022-04-04)<br>See paragraphs [0208]-[0240] and figures 28-33. | 1-17 |
| A | KR 10-2022-0037090 A (AGENCY FOR DEFENSE DEVELOPMENT) 24 March 2022 (2022-03-24)<br>See paragraphs [0020]-[0102] and figures 1-11. | 1-17 |
| A | KR 10-2019-0087007 A (AGENCY FOR DEFENSE DEVELOPMENT) 24 July 2019 (2019-07-24)<br>See paragraphs [0026]-[0046] and figures 1-4. | 1-17 |

☐ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **20 November 2023** | **20 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | International application No. |
|---|---|
| | **PCT/KR2023/012306** |

| Patent document cited in search report | | | Publication date (day/month/year) | Patent family member(s) | | | Publication date (day/month/year) |
|---|---|---|---|---|---|---|---|
| KR | 10-2022-0069930 | A | 27 May 2022 | CN | 114467038 | A | 10 May 2022 |
| | | | | EP | 4042192 | A1 | 17 August 2022 |
| | | | | JP | 2022-551507 | A | 09 December 2022 |
| | | | | US | 2022-0043118 | A1 | 10 February 2022 |
| | | | | US | 2022-0043128 | A1 | 10 February 2022 |
| | | | | WO | 2021-072380 | A1 | 15 April 2021 |
| KR | 10-2021-0153563 | A | 17 December 2021 | US | 2021-0389462 | A1 | 16 December 2021 |
| KR | 10-2022-0042202 | A | 04 April 2022 | CN | 114424086 | A | 29 April 2022 |
| | | | | EP | 3990946 | A1 | 04 May 2022 |
| | | | | JP | 2022-543389 | A | 12 October 2022 |
| | | | | US | 2023-0176223 | A1 | 08 June 2023 |
| | | | | US | 2023-0273320 | A1 | 31 August 2023 |
| | | | | WO | 2021-026241 | A1 | 11 February 2021 |
| KR | 10-2022-0037090 | A | 24 March 2022 | None | | | |
| KR | 10-2019-0087007 | A | 24 July 2019 | None | | | |

Form PCT/ISA/210 (patent family annex) (July 2022)